# EUROPEAN PATENT SPECIFICATION

(11) **EP 4 025 484 B1**
(45) Date of publication and mention of the grant of the patent: **10.12.2025**
(21) Application number: 20764679.5
(22) Date of filing: 04.09.2020
(51) Int. Cl.: B62K 3/02, B62K 25/28, B62K 25/04, B62K 3/04

(54) **A REAR WHEEL SUSPENSION SYSTEM FOR A BIKE**
FAHRRADHINTERRADAUFHÄNGUNGSSYSTEM
SYSTÈME DE SUSPENSION DE ROUE ARRIÈRE DE BICYCLETTE

(30) Priority: 06.09.2019 EP 19195940; 18.11.2019 EP 19209803
(43) Date of publication of application: 13.07.2022
(73) Proprietor: Lauf Cycles hf., 101 Reykjavik (IS)
(72) Inventor: SKÚLASON, Benedikt, 101 Reykjavik (IS); BENEDIKTSSON, Bergur, 104 Reykjavik (IS)
(74) Representative: Inspicos P/S
(86) International application number: PCT/EP2020/074805
(87) International publication number: WO 2021/044006

(56) References cited:
- EP-A2- 2 960 145
- WO-A1-2014/151699
- CN-Y- 2 367 530
- DE-C- 87 271
- JP-B2- 6 301 575
- US-A- 5 098 114
- US-A1- 2003 205 882
- US-A1- 2008 203 700
- US-A1- 2012 061 941
- US-A1- 2015 353 163

## Description

### FIELD OF THE INVENTION

The present invention relates to a rear wheel suspension system for a bike, and to a bike (bicycles and motorbikes) comprising such a suspension system.

### BACKGROUND OF THE INVENTION

Today's rear wheel suspension systems (in contrast to saddle suspension systems such as but not limited to; flexible seatposts, linkage suspension seatposts, suspension saddles, Trek's IsoSpeed^{®} rear system or in general bike frames designed to provide increased seatpost flex) for bikes (bicycles and motorbikes) can mostly be categorized into 3 key categories:
1. 4-bar linkage suspension systems, as seen on most modern "hard-hitting" mountain bikes. Examples are DW-link^{®}, Niner's CVA^{®}, equipped bikes etc. These systems, when designed correctly, can provide a high degree of suspension dynamics control and/or tuneability while being stiff laterally. These systems however require a supplemental suspension unit (spring of some sort, usually a telescopic coil or air spring with its associated added friction) and further pivots and links to connect and guide the required supplemental suspension unit. These systems are relatively heavy, require substantial maintenance and add complexity to a bike, it's therefore logical to only apply them when substantial suspension travel is needed/desired (this usually means rear wheel travel of above 100mm). Since these systems are generally designed around the said substantial travel, a damping unit (usually housed within the suspension unit) is also needed in order to "kill" some of the energy the system is charged with during an impact, and thus prevent a violent rebound that would otherwise cause a cyclist discomfort or him to lose control.
2. "Single pivot" suspension systems, as seen on lighter cross-country mountain bikes such as Scott Spark^{®} and Specialized Epic^{®} bikes. These systems generally have far more pivots than just the one implied in their name, however the suspension path of the rear wheel is mostly dictated by a single pivot that is generally placed close to the bottom bracket of its bike. Hence, the name. Further pivots and links are required to connect and guide the required supplemental suspension unit (spring of some sort, usually a telescopic coil or air spring with its associated added friction) this adds substantial weight and maintenance. These "single pivot" systems are generally lighter than "4-bar linkage" systems but offer less control and tuneability of suspension dynamics. Therefore "single pivot" systems are usually used for lower travel applications than "4-bar linkage" systems. However, the weight, maintenance and complexity addition compared to a non-suspended bike frame is still substantial and therefore this solution is rarely used for less than 70mm of rear wheel travel. Since these systems are generally designed around the said substantial travel, a damping unit (usually housed within the suspension unit) is also needed in order to "kill" some of the energy the system is charged with during an impact, and thus prevent a violent rebound that would otherwise cause a cyclist discomfort or him to lose control. A notable variation of "Single pivot" rear suspension is the one used on previous generation(s) of Cannondale Scalpel bikes where the pivot usually placed close to the bottom bracket was replaced by a flex-zone (living hinge) on the chainstays. In other aspects, these bikes were designed like "single pivot" bikes (with several pivots to connect and guide a telescopic suspension unit) and therefore the general pros/cons associated with "single pivot" suspension frame designs are still valid.
3. Flexible chainstays and seatstays combined with a telescopic suspension unit, without supplemental means of guiding its telescopic suspension units. Hereafter called FlexTelSus in this document. While the "single pivot" systems described above have pivots and links to guide their telescopic suspension unit. FlexTelSus systems include BMC's MTT^{®}, Moot's YBB^{®} and HiRide's ESAS^{®} (as seen on Pinarello Dogma K10s^{®}) rear suspension suspension systems (although ESAS is a slight variation, having an additional pivot above its telescopic suspension unit). These systems are simpler and lighter than aforementioned "single pivot" systems but offer little control of the suspension dynamics and the omission of supplemental links and pivots guiding the suspension unit can result in high stresses and associated high friction in the sliding surfaces of said suspension unit. As a result, these systems are generally not considered to be a good solution for smooth long-stroke suspension. They are therefore generally considered limited to a shorter travel (usually 10-35mm of rear wheel travel). To change the spring rate of these systems they generally offer replaceable elastomers and or springs but stiffness cannot be tuned in a simpler/quicker manner or on the fly. As these systems include telescopic sliding surfaces, they require maintenance of associated friction surfaces, where said friction can also prevent smooth suspension action. The HiRide ESAS^{®} offers a remote lockout function through the use of a hydraulic valve, but suspension stiffness cannot be altered "on the fly".

The international application WO 2014/151699 A1 provides a bicycle comprising wheels and a frame supported on the wheels. The frame includes a seatstay assembly defining a seatstay axis and including a spring assembly having a spring member (e.g., a leaf spring) at an angle of at least 5 degrees relative to the seatstay axis. The spring member has a width that is at least 4 times larger than its thickness. The international application also provides a bicycle comprising a frame that includes a seat tube and a seatstay assembly defining a seatstay axis. The seatstay assembly includes a spring member offset from the seatstay axis and non-parallel to the seatstsay axis. In one example, the seatstay assembly further includes a seatstay tube, and the spring member includes a rear portion secured to the seastay tube. The spring member can also include a front portion secured to a seat tube of the bicycle frame. WO 2014/151699 A1 discloses the features of the preamble of claim 1.

The inventor of the present invention has appreciated that there is thus a need for an improved rear wheel suspension system for bikes. In particular, one that offers an appealing combination of adjustability, low friction, low weight, low maintenance, low manufacturing complexity and pleasing aesthetics. In particular, in low-mid travel configurations (up to approx. 80mm of rear wheel suspension).

### SUMMARY OF THE INVENTION

It would be advantageous to achieve an improved rear wheel suspension system for bikes. In particular, one that offers an appealing combination of adjustability, low friction, low weight, low maintenance, low manufacturing complexity and pleasing aesthetics. In particular, in low-mid travel configurations (up to approx. 80mm of rear wheel suspension).

In general, the invention preferably seeks to mitigate, alleviate or eliminate one or more of the above-mentioned disadvantages of the prior art, singly or in any combination. In particular, it may be seen as an object of the present invention to provide a rear wheel suspension system that solved the above-mentioned problems, or other problems, of the prior art.

To better address one or more of these concerns, in a first aspect of the invention a bike comprising:
- a rear wheel (109) with a maximum radius (R), the rear wheel defining a center plane (CP) perpendicular to the rotational axis of the rear wheel and coincident with the ground contact of the rear wheel when said bike is upright on level ground,
- a rear wheel suspension system

the rear wheel suspension system (101) comprising:
   - a seat tube (104),
   - a bottom bracket shell (106) defining a rotational axis (105) extending there through in direction transverse to said center plane (CP), said bottom bracket shell forming part of or being securely fixed to said seat tube (104),
   - a left side flexible chainstay (102) and a right side flexible chainstay (103), extending longitudinally on either side of said center plane (CP), each with its forward end configured for attaching to a lower portion of the seat tube (104) of said bike less than 250mm from said rotational axis (105) of a bottom bracket shell (106),
   - a left side seatstay (107) and a right side seatstay (108), each having lower end areas connected to posterior end areas of each of said flexible chainstays, and each of said seatstays extending upwardly and forwardly with its opposite end being configured to extend to a position which is outside of the maximum radius ^{®} of the rotably attached rear wheel (109) and at a distance from an upper portion of said seat tube of said bike,
   - a set of dropouts (110) located where said flexible chainstays and said seatstays interconnect for rotably supporting said rear wheel of said bicycle,
   - a leaf spring (111) interconnecting said seatstays and said seat tube, wherein one end of the leaf spring (111) is connected to the upper end area of said seatstays, and wherein the leaf spring (111) extends downwardly from its point of connection to the upper end area of the seatstays to a point of connection to said seat tube of said bicycle, said leaf spring defining opposite top and bottom surfaces extending transversely to said center plane (CP), wherein the said leaf spring is arranged at a distance D to the seat tube in a direction perpendicular to the said top and bottom surfaces of said leaf spring to allow flex of said leaf spring towards said seat tube and thus vertical flex of said flexible chainstays
   - one or more stiffness adjustment inserts, arranged and secured in place between said leaf spring and said seat tube,
wherein the seatstays are connected to the seat tube solely via the leaf spring and the one or more stiffness adjustment inserts, with no other elements interconnecting the seat stays and the seat tube
characterized in that
one or more of said one or more stiffness adjustment inserts are slidable upwards and downwards along and between said leaf spring and seat tubeor elevatable substantially perpendicularly to said top and bottom surfaces of said leaf spring.

Thus, providing vertical suspension of said rear wheel, with good resistance to lateral forces without the use of pivots or sliding surfaces, thus enabling light weight constructions while requiring little or no maintenance. Said vertical suspension being mostly frictionless and thus not requiring large impacts to overcome initial stiction, thereby being very effective at absorbing small hits during riding.

In one embodiment, said left side flexible chainstay and said right side flexible chainstay, said left side seatstay and said right side seatstay, said leaf spring and said seat tube of said rear wheel suspension system are all a part of the same non-disassemblable body, this can for example, but not limited to, be achieved by monocoque composite material manufacturing techniques, by bonding of composite material parts or by welding of metal parts.

Thus, no screws, bolts, rivets, pivots, etc. between these parts are adding to the complexity, weight, friction and/or maintenance of the system.

In one embodiment, said left side flexible chainstay and said right side flexible chainstay, said left side seatstay and said right side seatstay, said leaf spring and said seat tube of said rear wheel suspension system are made of more than one disassemblable bodies, this can for example, but not limited to, be achieved by bolting together, snapping into place, etc.

Thus, facilitating replaceable components, transition between different materials, easy component supply between companies, etc.

In one embodiment, said leaf spring has a solid cross section.

Thus, achieving maximal flexural performance, i.e. weight carrying capacity for a certain amount of possible flex, for a given thickness.

In one embodiment, said leaf spring has a hollow cross section.

Thus, allowing for manufacturing methods such as composite material bladder pressured molding and or allowing for a lower weight design.

In one embodiment, said seatstays are at least 30% thinner on average in the majority of their upmost lengthwise third than the lower at least 2/3rd lengthwise remainder of said seatstays are on average.

Thus, enabling easy deformation of the said majority of upmost length-wise third of said seatstays, thus enabling the upper end of said leaf spring to tilt substantially under load compared to the root of said leaf spring by said seat tube, i.e. enabling said leaf spring to flex more as a cantilever beam from its root at connection to said seat tube, as opposed to taking on a S-shape under load, between said seat tube and said seatstays. As evident from simple beam theory, this enables designs of said leaf spring that are better at carrying a high load at a given amount of maximum wheel travel. Comparison seatstays that would be very thin for their entire length would however result in a relatively flimsy and laterally unstable ride.

In one embodiment, said leaf spring and said left and right seat stays are interconnected via a pivot.

Thus, although adding weight and complexity, enabling said leaf spring to flex more as a cantilever beam from its root at connection to said seat tube, as opposed to taking on a S-shape under load, between said seat tube and said seatstays. As evident from simple beam theory, this enables designs of said leaf spring that are better at carrying a high load at a given amount of maximum wheel travel.

In one embodiment, said leaf spring and said seatstays do not have a clearly defined transition point, instead a transition area is defined where one gradually morphs into the other, with the upmost part of said seatstays providing substantial leaf spring functionality.

In one embodiment, said seat tube and said leaf spring are formed so that the effective spring length of said leaf spring is shortened as the said rear wheel suspension system compresses, by said leaf spring coming into contact with said seat tube at designated one or more locations, direct contact or indirect contact through intermediate bodies such as elastomer materials.

Thus, making for a progressive spring rate suspension system, this being a benefit for riders who want extra sensitive suspension for smaller hits, while having stiffer suspension deeper into the suspension travel.

In one embodiment, more than 30% of the length of said top and bottom surfaces of said leaf spring is at any given location less than 12° from being parallel to said seat tube of said bike.

Thus, enabling tight packaging of said leaf spring along said seat tube while providing flex in the desired direction, perpendicularly towards said seat tube, to effectively achieve upwards flex of said flexible chainstays.

In one embodiment, more than 50% of the length of said top and bottom surfaces of said leaf spring is at any given location less than 12° from being parallel to said seat tube of said bike.

Thus, enabling tight packaging of said leaf spring along said seat tube while providing flex in the desired direction, perpendicularly towards said seat tube, to effectively achieve upwards flex of said flexible chainstays.

In one embodiment, the width of said leaf spring at any given height above ground location is, when looked at from the front, within 10mm of the width of said seat tube in the same height above ground location.

Thus, achieving good flexural performance, i.e. being able to carry high weight over a large displacement at a good stiffness in the intended flex direction, and good lateral stiffness of said leaf spring with limited obtrusiveness and limited added air resistance.

Said rear wheel suspension system further comprises one or more stiffness adjustment inserts, arranged and secured in place between said leaf spring and said seat tube. The stiffness adjustment inserts may in particular be configured and arranged to adjust the effective spring length of the leaf spring, notably to reduce the effective spring length.

Thus, riders of different body weight and/or with different riding preferences may shorten the effective spring length of said leaf spring and thus increase the spring rate of said rear wheel suspension system.

In one embodiment, one or more of said one or more stiffness adjustment inserts are each contacting both said leaf spring and said seat tube when rider is stationary in riding position on said bike.

Thus, changing the initial stiffness of the said rear wheel suspension system.

In one embodiment, one or more of said one or more stiffness adjustment inserts are each contacting only either said leaf spring or said seat tube when rider is stationary in riding position on said bike, then each contacting both said leaf spring and said seat tube when further compressed into its suspension travel.

Thus, when only partially reaching between said seat tube and said leaf spring said one or more stiffness adjustment inserts can make for a progressive spring rate suspension system, as the said one or more inserts can come into contact with both sides when the suspension system has partially compressed and thereby decreasing the effective spring length, this is a benefit for riders who want extra sensitive suspension for smaller hits, while having stiffer suspension deeper into the suspension travel.

In one embodiment, one or more of said one or more stiffness adjustment inserts are elevatable in a direction substantially perpendicularly to said top and bottom surfaces of said leaf spring; either secured to said leaf spring and adjustable in how far they are elevated towards said seat tube, or secured to said seat tube and adjustable in how far they are elevated towards said leaf spring, said one or more stiffness adjustment inserts being secured in place by any applicable fastening method.

Thus, when fully reaching the opposite side, with a rider stationary in riding position on said bike, shortening the effective spring length of said leaf spring and thus stiffening the suspension, making it suit riders preferring stiffer suspension, when partially reaching the opposite side the said elevatable stiffness adjustment insert can make for a progressive spring rate suspension system, as the said elevatable stiffness adjustment insert comes into contact with the opposite side when the suspension system has partially compressed, this is a benefit for riders who want extra sensitive suspension for smaller hits, while having stiffer suspension deeper into the suspension travel.

In one embodiment comprising said one or more elevatable stiffness adjustment inserts, one or more of said one or more elevatable stiffness adjustment inserts can be elevated by actuators such as, but not limited to, hydraulic pistons, screw jacks, etc. Said actuators can, e.g. but not limited to, be manually operated via buttons, levers, turn knobs, dials or with a tool such as an Allen key or screwdriver.

Operation of said actuators can be via a cable- or hydraulically connected remote, furthermore, said actuators can e.g. be driven by electric motors, either controlled via an electrical wire connected remote or via a wireless remote. Said cable-, hydraulic-, electrical wire- or electrical wireless- remotes can for instance be mounted on the handlebar of said bike.

In one embodiment, said top and bottom surfaces of said leaf spring are substantially parallel to the adjacent surface of said seat tube on the lengthwise portion of said leaf spring that reaches from where said leaf spring and seat tube connect, at the root of said leaf spring, to a portion at least 30% upwards along the length of said leaf spring.

As used herein, the feature "substantially parallel" in particular means that the top and bottom surfaces of the leaf spring define an angle relative to the adjacent surface of the seat tube of at most 6 degrees, such as an angle of at most 4 degrees, such as an angle of at most 2 degrees. Angles in these ranges allow the stiffness adjustment insert to fulfil its purpose by being able to reach between the surfaces of the leaf spring and the seat tube over the lengthwise portion of said leaf spring that reaches from where said leaf spring and seat tube connect at the root of said leaf spring, to the position at least 30% upwards along the length of the leaf spring.

It will thus be appreciated that the top and bottom surfaces of the leaf spring need not be completely parallel with the adjacent surface of the seat tube; for example, the leaf spring may be shaped and configured such that it pre-loads (or compresses) the slidable insert slightly. The gap between the spring and the seat tube may thus be slightly narrower away from the spring root than at the spring root. Thus, when the insert slides away from the spring root, it provides an outwardly directed biasing force to the spring to displace it by a few millimeters or less, e.g., at most 5 mm, such as preferably at most 2 mm.

In one embodiment, said top and bottom surfaces of said leaf spring are substantially parallel to the adjacent surface of said seat tube on the lengthwise portion of said leaf spring that reaches from where said leaf spring and seat tube connect, at the root of said leaf spring, to a portion at least 30% upwards along the length of said leaf spring, in this said substantially parallel lengthwise portion of said top and bottom surfaces of said leaf spring the substantially perpendicular distance between said leaf spring and said seat tube being between 1mm and 40mm, such as 5-20mm.

Thus, creating "real estate" for slidable stiffness adjustment inserts between said leaf spring and said seat tube. Said slidable stiffness adjustment inserts able to slide upwards and downwards along said leaf spring and seat tube to tune the stiffness of said rear wheel suspension system.

In one embodiment, where said top and bottom surfaces of said leaf spring are substantially parallel to the adjacent surface of said seat tube on the lengthwise portion of said leaf spring that reaches from where said leaf spring and seat tube connect, at the root of said leaf spring, and from there to a portion at least 30% upwards along the length of said leaf spring. Preferably, said leaf spring is substantially straight in said portion at least 30% upwards along the length of said leaf spring.

Thus, allowing for straight linear actuators to be used, that would not be able to function along significantly curved leaf springs, such as screw jack actuators.

In one embodiment, one or more of said one or more stiffness adjustment inserts are slidable upwards and downwards along and between said leaf spring and said seat tube. Said one or more slidable stiffness adjustment inserts are preferably guided to prevent lateral movement. When the rider is stationary in a riding position on said bike, said one or more slidable stiffness adjustment inserts can either reach entirely between said leaf spring and said seat tube, or reach partially between said leaf spring and said seat tube.

Thus, when reaching entirely between the said leaf spring and seat tube shortening the effective spring length of said leaf spring and thus stiffening the suspension, when partially reaching between the said leaf spring and said seat tube, the said one or more slidable stiffness adjustment inserts may confer a progressive spring rate suspension system, as the said insert achieves contacts with both said leaf spring and said seat tube when the suspension system has partially compressed. This is a benefit for riders who want extra sensitive suspension for smaller hits, while having stiffer suspension deeper into the suspension travel. Being slidable upwards/downwards can enable a rider to conveniently adjust his suspension according to his preference.

In one embodiment comprising said one or more slidable stiffness adjustment inserts, said one or more slidable stiffness adjustment inserts are between 5-40mm long, i.e. in the upwards/downwards direction.

In one embodiment, comprising said one or more slidable stiffness adjustment inserts, one or more of said one or more slidable stiffness adjustment inserts comprise a mechanically gripping texture (A) that interacts with a matching opposing mechanically gripping texture (B) on said leaf spring and or on said seat tube, said one or more mechanically gripping slidable stiffness adjustment inserts further comprising means of pressuring said opposing mechanically gripping textures (A and B) together, said pressuring may be done via, but not limited to, spring loading, screw tightening, etc.

Thus, preventing said one or more mechanically gripping slidable stiffness adjustment inserts from slipping unintentionally upwards or downwards along said leaf spring and seat tube during riding of said bike.

In one embodiment, said pressuring of said opposing mechanically gripping textures (A and B) together is achieved through a spring-loaded lever, where pushing or pulling the lever levitates said pressure and thus allows said slidable stiffness adjustment insert to be slid upwards or downwards while lever is pushed or pulled.

In one embodiment comprising said one or more slidable stiffness adjustment inserts, said rear wheel suspension system further comprises a linear actuator for sliding one or more of said one or more slidable stiffness adjustment inserts upwardly and downwardly. Said linear actuator can e.g. be a screw jack, scissor drive, rack and pinion drive, hydraulic actuator, pneumatic actuator, pullable wire plus retracting spring combo, etc.

In one embodiment comprising said linear actuator, said linear actuator is arranged in a groove that runs up and down the posterior surface of said seat tube (with the notable exclusion of a scissor drive linear actuator, as it would not easily fit in a groove).

Thus, moving said linear actuator out of the way from a flexing leaf spring, allowing more flex of said leaf spring than otherwise possible.

In one embodiment comprising said linear actuator, where said linear actuator is arranged in a groove that runs up and down the posterior surface of said seat tube (with the notable exclusion of a scissor drive linear actuator, as it would not easily fit in a groove) said one or more of said one or more slidable stiffness adjustment inserts have an extrusion shaped to interact laterally with the surface of said groove.

Thus, simultaneously moving said linear actuator out of the way from a flexing leaf spring, allowing more flex than otherwise possible, and preventing lateral movement of said one or more slidable inserts.

In one embodiment, comprising said one or more slidable stiffness adjustment inserts comprise a wheel or pinion that interacts with cogged or toothed bars or rails that are fixed to said leaf spring and/or seat tube and extend upwards/downwards along said leaf spring and/or seat tube. Thus, a linear actuator is embodies as a rack and pinion system that comprises a wheel or pinion mounted on one or more of said one or more slidable stiffness adjustment inserts that interacts with cogged or toothed racks/bars or rails that are fixed to said leaf spring and/or seat tube and extending upwards/downwards along said leaf spring and/or seat tube.

Thus, by turning said wheel or pinion driving said one or more slidable stiffness adjustment inserts upwards/downwards, said wheel or pinion moving upwards/downwards with said slidable stiffness adjustment insert, and thus altering the stiffness of said rear wheel suspension system by shortening/lengthening the effective spring length of said leaf spring.

In one embodiment, comprising said wheel or pinion on one or more of said one or more slidable stiffness adjustment inserts, said wheel or pinion is connected to a drive mechanism operated via, but not limited to, a button, a lever, a turn knob, a dial or via a tool such as an allen key or screwdriver, operation can e.g. be via a cable- or hydraulically connected remote, or in the case when said drive mechanism is powered by one or more electric motors, either via electrical-wire connected remote or via wireless remote, said remotes, weather they are connected by a cable-, hydraulic line, electrical wire- or electrical wireless communications, can for instance be mounted on the handlebar of said bike.

In one embodiment, comprising said one or more slidable stiffness adjustment inserts, said linear actuator is a rack and pinion system that comprises a wheel or pinion mounted to either said seat tube or said leaf spring, then interacting with cogged or toothed racks/bars or rails that are fixed to one or more of said one or more slidable inserts extending upwards/downwards along said leaf spring and/or seat tube.

Thus, by turning said wheel or pinion driving said one or more slidable stiffness adjustment inserts up/down, while said wheel or pinion does not move upwards/downwards itself relatively to said leaf spring and said seat tube, and thus altering the stiffness of said rear wheel suspension system by shortening/lengthening the effective spring length of said leaf spring.

In one embodiment, comprising said one or more slidable stiffness adjustment inserts, one or more of said one or more slidable stiffness adjustment inserts comprise one or more cogged or toothed racks/bars or rails that extend downwards from said one or more of said one or more slidable stiffness adjustment inserts substantially along said leaf spring and/or seat tube. Said leaf spring and/or said seat tube may comprise a wheel or pinion that interacts with said one or more cogged toogthed bars or rails. The one or more cogged or toothed racks, bars or rails may extend further through an opening at the junction of said leaf spring and said seat tube, at the root of said leaf spring, into a cavity in said seat tube, said leaf spring and/or said seat tube comprising a wheel or pinion that interacts with said one or more cogged or toothed bars or rails.

Thus, said one or more cogged or toothed racks/bars or rails are in this configuration, i.e. extending downwards, below said one or more of said one or more slidable stiffness adjustment inserts and thus outside of the most "active" flex zone of said leaf spring, that is located above said stiffness adjustment insert, thereby said bars or rails are not intruding into the aforementioned valuable flex zone, furthermore the said opening at the junction of said leaf spring and seat tube facilitates said cogged or toothed bars to move down below the junction of said leaf spring and said seat tube thus allowing associated said one or more slidable stiffness adjustment insert to be slid further down towards said junction of said leaf spring and said seat tube.

In one embodiment, comprising said one or more slidable stiffness adjustment inserts, one or more of said one or more slidable stiffness adjustment inserts comprise one or more cogged or toothed racks/bars or rails that extend downwards from said one or more of said one or more slidable stiffness adjustment inserts substantially along said leaf spring and/or seat tube and then extending further through an opening at the junction of said leaf spring and said seat tube, at the root of said leaf spring, into a cavity in said seat tube, said cavity in said seat tube comprising a wheel or pinion that interacts with said one or more cogged or toothed racks/bars or rails, said cavity in said seat tube also comprising an associated drive mechanism of said wheel or pinion.

Thus, by housing said wheel or pinion and associated drive mechanism in said cavity, aforementioned components can be neatly nested in said cavity, offering good protection from the elements and hits, good fastening options to said cavity of said seat tube, and last but not least, neatly keeping said components away from the valuable space used for flex of said leaf spring.

In one embodiment, comprising said wheel or pinion located on; said leaf spring, said seat tube or in said cavity in said seat tube, is connected to a drive mechanism operated via, but not limited to, buttons, levers, turn knobs, dials or with a tool such as an allen key or screwdriver, operation can e.g. be via a cable- or hydraulically connected remote, or in the case when said drive mechanism is driven by one or more electric motors, either via electrical-wire connected remote or via wireless remote. Said remotes, weather they are connected by a cable-, hydraulic line, electrical wire- or electrical wireless communications, can for instance be mounted on the handlebar of said bike.

In one embodiment comprising one or more slidable stiffness adjustment inserts, one or more of said one or more slidable stiffness adjustment inserts can be slid upwards/downwards by a screw jack linear actuator.

In one embodiment comprising one or more slidable stiffness adjustment inserts, one or more of said one or more slidable stiffness adjustment inserts can be slid upwards/downwards by a hydraulic linear actuator.

In one embodiment, said hydraulic linear actuators or said screw jack linear actuators can, e.g. but not limited to, be manually operated via buttons, levers, turn knobs, dials or with a tool such as an allen key or screwdriver. Operation of said actuators can be via a cable- or hydraulically connected remote. Furthermore, said actuators can e.g. be driven by electric motors, either controlled via an electrical wire connected remote or via a wireless remote. Said cable-, hydraulic-, electrical wire- or electrical wireless- remotes can for instance be mounted on the handlebar of said bike.

In one embodiment comprising said hydraulic linear actuator, said hydraulic linear actuator extends upwards from said one or more of said one or more slidable stiffness adjustment inserts and then connects its other end to either said leaf spring or said seat tube.

In one embodiment comprising said hydraulic linear actuator, said hydraulic linear actuator extends downwards from said one or more of said one or more slidable stiffness adjustment inserts and then extending further through an opening at the junction of said leaf spring and said seat tube, at the root of said leaf spring, into a cavity in said seat tube.

Thus, said hydraulic linear actuator is in this configuration, i.e. extending downwards, below said one or more of said one or more slidable stiffness adjustment inserts and thus outside of the most "active" flex zone of said leaf spring, that is located above said stiffness adjustment insert, thereby said hydraulic linear actuator is not intruding into the aforementioned valuable flex zone, furthermore the said opening at the junction of said leaf spring and seat tube facilitates said hydraulic linear actuator to move down below the junction of said leaf spring and said seat tube thus allowing associated said one or more slidable stiffness adjustment insert to be slid further down towards said junction of said leaf spring and said seat tube.

In one embodiment comprising said screw jack linear actuator, said screw jack linear actuator extends upwards from said one or more of said one or more slidable stiffness adjustment inserts and then connects its other end to either said leaf spring or said seat tube.

In one embodiment comprising said screw jack linear actuator, said screw jack linear actuator extends downwards from said one or more of said one or more slidable stiffness adjustment inserts and then extending further through an opening at the junction of said leaf spring and said seat tube, at the root of said leaf spring, into a cavity in said seat tube, where threads of said screw jack linear actuator interact with a threaded body mounted in the said junction area of said leaf spring and said seat tube.

Thus, said screw jack linear actuator is in this configuration, i.e. extending downwards, below said one or more of said one or more slidable stiffness adjustment inserts and thus outside of the most "active" flex zone of said leaf spring, that is located above said stiffness adjustment insert, thereby said screw jack linear actuator is not intruding into the aforementioned valuable flex zone, furthermore the said opening at the junction of said leaf spring and seat tube facilitates said screw jack to move down below the junction of said leaf spring and said seat tube thus allowing associated said one or more slidable stiffness adjustment insert to be slid further down towards said junction of said leaf spring and said seat tube.

In one embodiment, said cavity in said seat tube is protected by removable covers on its left and/or right sides.

In one embodiment, said cavity in said seat tube is made up by two parts extending upwards/downwards, one of the parts being posterior to said cavity in said seat tube and the other part being anterior to said cavity in said seat tube, the two parts connecting together above and below said cavity in said seat tube.

In one embodiment, comprising one or more stiffness adjustment inserts, one or more of said one or more stiffness adjustment inserts are formed so that the thickness of said one or more of said one or more stiffness adjustment inserts at the end that is closer to the junction of said seat tube and said leaf spring is such that, when rider is stationary in riding position on said bike, it reaches entirely between said leaf spring and said seat tube, while its thickness at the end further away from the intersection of said leaf spring and seat tube is such that it lacks up to 5mm to reach entirely between said leaf spring and seat tube.

This can make each of said one or more of said one or more stiffness adjustment inserts provide more than one spring rate for said rear wheel suspension system, i.e. providing progressive stiffness. Stiffness ramping up as the end further away from the intersection of said leaf spring and seat tube comes in contact with both said leaf spring and seat tube, as the said suspension system has been partially compressed.

The seatstays are connected to the seat tube solely via the leaf spring and the optional stiffness adjustment insert, with no other elements interconnecting the seat stays and the seat tube. Such embodiments save weight, do not add other connections that could slow down the suspension response and/or add maintenance and are simple and inexpensive, given that a minimum of parts are needed.

In one embodiment comprising said one or more stiffness adjustment inserts, said rear wheel suspension system further comprises a liner material fully or partially covering surfaces of said leaf spring and or said seat tube that otherwise could come into contact with each other and or into contact with one or more of said one or more stiffness adjustment inserts, said liner material can be made of, but is not limited to, a plastic or elastomer material, said liner material is defined to become a part of the body it is attached to, whether it being said leaf spring or said seat tube.

Thus, protecting said leaf spring and/or said seat tube from friction and/or wear and potentially providing a smoother engagement of said one or more stiffness adjustment inserts.

In one embodiment, an elastomer bump stop is located and secured in place between said leaf spring and said seat tube.

Thus, enabling a rear wheel suspension system design with a relatively low spring rate without it resulting in harsh bottom outs.

In one embodiment, said rear wheel suspension system further comprises a forwardly extending damper arranged from said seatstays to said seat tube.

Thus, although adding weight and complexity, adding further control of the dynamics of the suspension is provided by means of absorbing compression and/or rebound energy, this becomes desirable when said rear wheel suspension system is used to achieve relatively long travel suspension. As a rough reference, this is often considered to happen when suspension travel reaches approximately 40-70mm.

In one embodiment, said left side flexible chainstay and said right side flexible chainstay connect to said seat tube between 100mm and 250mm above the rotational axis of the bottom bracket area of said bike, both said left side flexible chainstay and said right side flexible chainstay connecting to said seat tube at substantially the same height.

Thus, potentially freeing up space to fit wider tires on said bike without said tires interfering with crankset of said bike, and furthermore changing the movement path of the suspended said rear wheel so that the movement is more directed rearwards than it would otherwise be if chainstays were connected lower to said seat tube, this can help with small bump compliance and it can also help reducing pedal bob, as chain tension can work against the suspension movement of said rear wheel suspension system in this configuration.

In one embodiment, said one or more stiffness adjustment inserts have their widths extending at least essentially between the left and right edge of said leaf spring.

Thus, an adjustable rear wheel suspension system is provided that does not roll excessively to the sides when the rider is pedaling or maneuvering.

Throughout this document a bike can mean; a conventional pedal powered bicycle, motor assisted pedal powered bicycle or a motor bike.

Throughout this document it is assumed that the bike, including said suspension system, is unless otherwise specified in an upright position with both front and rear wheels resting on horizontal ground with the rotational axis of the wheels parallel to the ground.

Throughout this document said seatstays are not to be understood as being fully rigid non-flexible structures. Said seatstays are e.g. to be understood as being shaped roughly according to common practice in today's bicycles, unless stated otherwise. This way, said seatstays preferably flex a bit during the suspension movement of said rear wheel suspension system, thus decreasing required strain on said flexible chainstays and/or said leaf spring.

Throughout this document said flexible chainstays are not to be understood as being excessively flexible structures or outlandishly shaped. Said flexible chainstays are e.g. to be understood as being shaped roughly according to common practice in today's bicycles, but potentially slightly lower in build height than most commonly seen, to allow for more vertical flex.

Throughout this document, said seatstays, said chainstays, said dropout, said seat tube, said leaf spring and said one or more stiffness adjustment inserts can be made out of, but not limited to being made out of, e.g. composite materials such as epoxy reinforced carbon fiber or glass fiber, aluminum, steel, titanium, plastic materials, elastomers, wood, etc.

### BRIEF DESCRIPTION OF DRAWINGS

FIGs 1-7 show examples of non-adjustable versions of a rear wheel suspension systems for a bike.
FIGs 8-9 show examples of rear wheel suspension systems for a bike that include stiffness adjustment inserts.
FIG 10 shows an embodiment of the present invention that includes elevatable stiffness adjustment inserts.
FIGs 11-19 show embodiments of the present invention that include slidable stiffness adjustment inserts, or examples of rear wheel suspension systems for a bike that are configured to include slidable stiffness adjustment inserts.
FIGs 20-27 show further examples rear wheel suspension systems for a bike.

### DESCRIPTION

The present invention relates to an improved bike comprising a rear wheel suspension system. In particular, one that offers an appealing combination of adjustability, low friction, low weight, low maintenance, low manufacturing complexity and pleasing aesthetics. In particular, in low-mid travel configurations (up to approx. 80mm of rear wheel suspension).

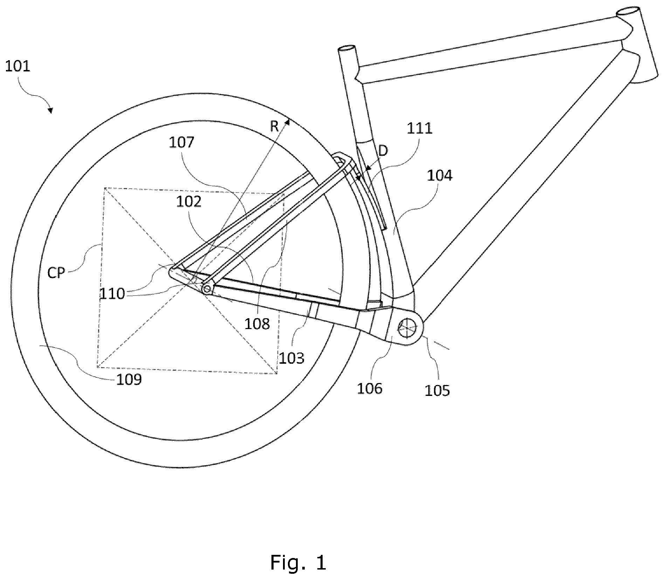

FIG 1 shows a rear wheel suspension system (101) for a bike, the bike comprising:
- a rear wheel (109) with a maximum radius (R), the rear wheel defining a center plane (CP) perpendicular to the rotational axis of the rear wheel and coincident with the ground contact of the rear wheel when said bike is upright on level ground, the rear wheel suspension system (101) comprising:
   - a seat tube (104),
   - a bottom bracket shell (106) defining a rotational axis (105) extending there through in direction transverse to the said center plane CP, said bottom bracket shell forming part of or being securely fixed to said seat tube (104),
   - a left side flexible chainstay (102) and a right side flexible chainstay (103), extending longitudinally on either side of said center plane (CP), each with its forward end configured for attaching to a lower portion of the seat tube (104) of said bike less than 250mm from said rotational axis (105) of a bottom bracket shell (106),
   - a left side seatstay (107) and a right side seatstay (108), each having lower end areas connected to posterior end areas of each of said flexible chainstays, and each of said seatstays extending upwardly and forwardly with its opposite end being configured to extend to a position which is outside of the maximum radius (R) of the rotably attached rear wheel (109) and at a distance from an upper portion of said seat tube of said bike,
   - a set of dropouts (110) located where said flexible chainstays and said seatstays interconnect for rotably supporting said rear wheel of said bicycle,
   - a leaf spring (111) interconnecting said seatstays and said seat tube, wherein one end of the leaf spring (111) is connected to the upper end area of said seatstays, and wherein the leaf spring (111) extends downwardly from its point of connection to the upper end area of the seatstays to a point of connection to said seat tube of said bicycle, said leaf spring defining opposite top and bottom surfaces extending transversely to said center plane (CP),
wherein the said leaf spring is arranged at a distance D to the seat tube in a direction perpendicular to said top and bottom surfaces of said leaf spring to allow flex of said leaf spring towards said seat tube and thus vertical flex of said flexible chainstays.

Thus, providing vertical suspension of said rear wheel, with good resistance to lateral forces without the use of pivots or sliding surfaces, thus enabling light weight constructions while requiring little or no maintenance. Said vertical suspension being mostly frictionless and thus not requiring large impacts to overcome initial stiction, thereby being very effective at absorbing small hits during riding.

In one example of said rear wheel suspension system, said left side flexible chainstay and said right side flexible chainstay, said left side seatstay and said right side seatstay, said leaf spring and said seat tube of said rear wheel suspension system are all a part of the same non-disassemblable body, this can for example, but not limited to, be achieved by monocoque composite material manufacturing techniques, by bonding of composite material parts or by welding of metal parts.

Thus, no screws, bolts, rivets, pivots, etc. between these parts are adding to the complexity, weight, friction and/or maintenance of the system.

In one example of said rear wheel suspension system, said left side flexible chainstay and said right side flexible chainstay, said left side seatstay and said right side seatstay, said leaf spring and said seat tube of said rear wheel suspension system are made of more than one disassemblable bodies, this can for example, but not limited to, be achieved by bolting together, snapping into place, etc.

Thus, facilitating replaceable components, transition between different materials, easy component supply between companies, etc.

In one example of said rear wheel suspension system, said leaf spring has a solid cross section.

Thus, achieving maximal flexural performance, i.e. weight carrying capacity for a certain amount of possible flex, for a given thickness.

In one example of said rear wheel suspension system, said leaf spring has a hollow cross section.

Thus, allowing for manufacturing methods such as composite material bladder pressured molding and or allowing for a lower weight design.

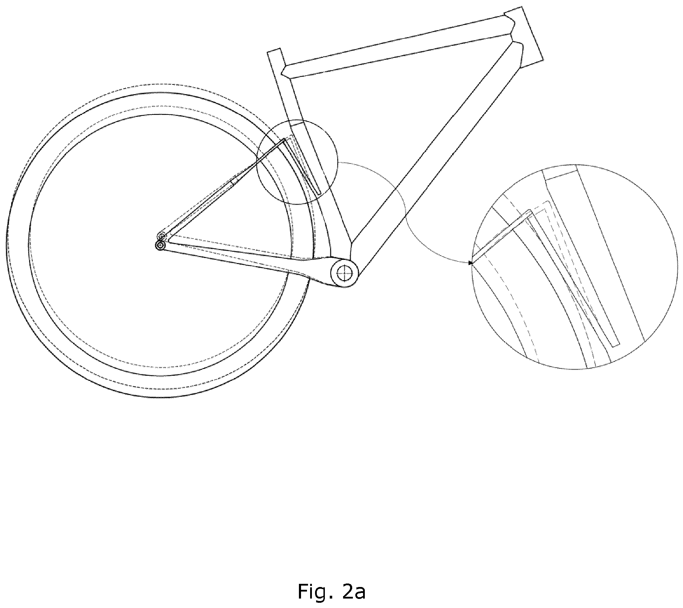

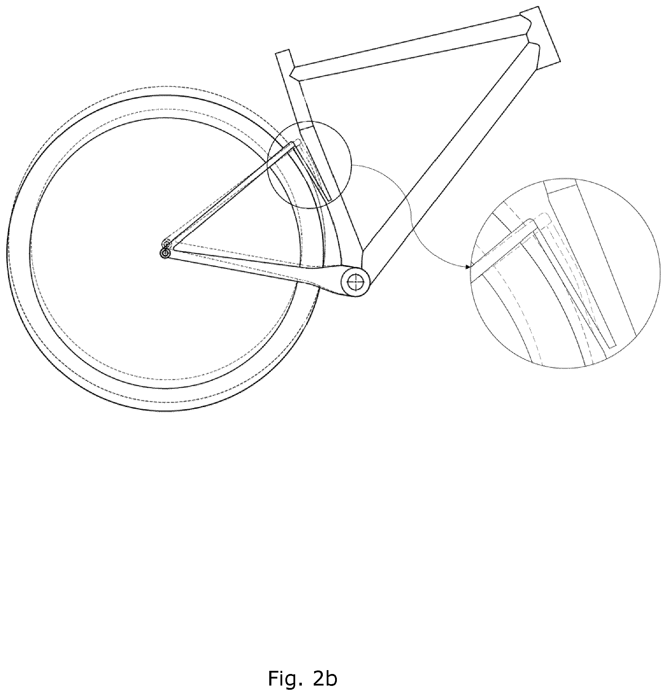

FIGs 2a and 2b. FIG 2a shows deformation under load of an example of said rear wheel suspension system, where said seatstays are at least 30% thinner on average in the majority of their upmost length-wise third 201, when said bike is looked at directly from the left or right, than the lower at least 2/3^{rd} length-wise remainder of said seatstays are on average. While FIG 2b shows deformation under load where said seatstays have a uniform higher thickness and thus force said leaf spring to flex into an S-shape rather than flexing as a simple cantilever beam.

Thus, in FIG 2a enabling easy deformation of the said majority of upmost length-wise third of said seatstays, thus enabling the lower end of said leaf spring to tilt substantially under load compared to the root of said leaf spring by said seat tube, i.e. enabling said leaf spring to flex more as a cantilever beam from its root at connection to said seat tube, as opposed to taking on a S-shape under load, between said seat tube and said seatstays. As evident from simple beam theory, this enables designs of said leaf spring that are better at carrying a high load at a given amount of maximum wheel travel, as the said leaf spring can be made thicker in this configuration and thus stronger, while still providing the required flex. Comparison seatstays that are thin for their entire length would however result in a relatively flimsy ride feel, as they would not pinpoint the flex of said seatstays to the desired location in the top 3^{rd} but rather distribute it over its entire length.

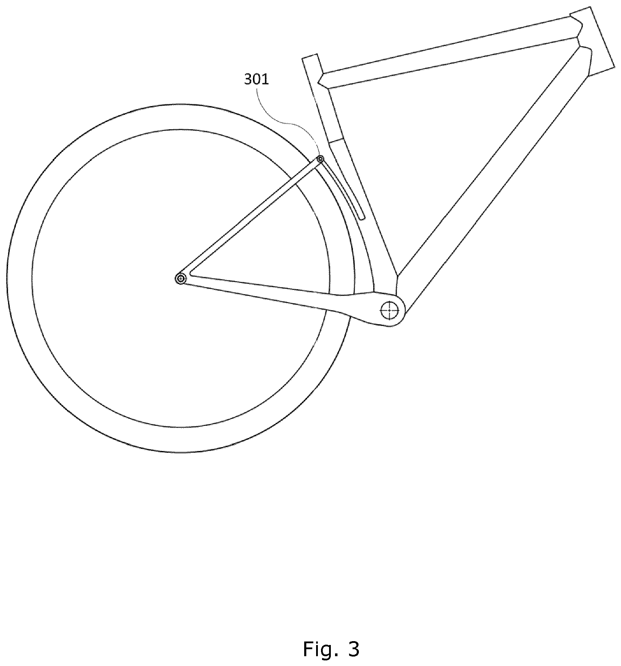

FIG 3 shows an example of said rear wheel suspension system, where said leaf spring and said left and right seat stays are interconnected via a pivot 301.

Thus, enabling said leaf spring to flex more as a cantilever beam from its root at connection to said seat tube, as opposed to taking on a S-shape under load, between said seat tube and said seatstays. As evident from simple beam theory, this enables designs of said leaf spring that are better at carrying a high load at a given amount of maximum wheel travel.

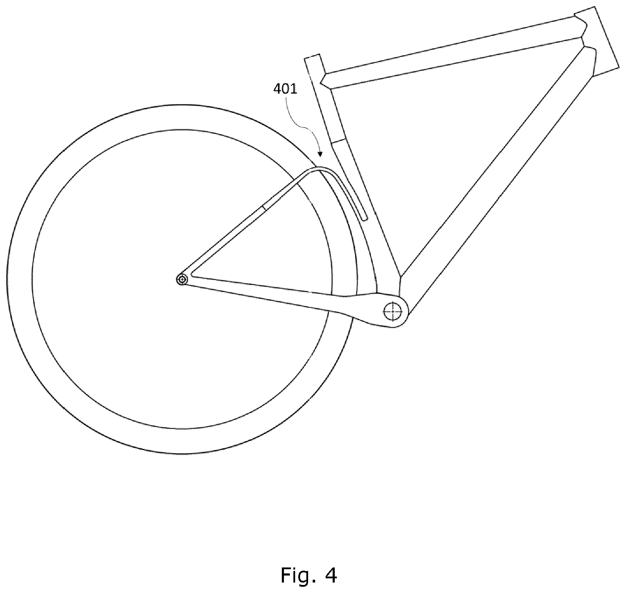

FIG 4 shows an one example of said rear wheel suspension system, where said leaf spring and said seatstays do not have a clearly defined transition point, instead a transition area 401 is defined where one gradually morphs into the other, with the upmost part of said seatstays providing substantial leaf spring functionality.

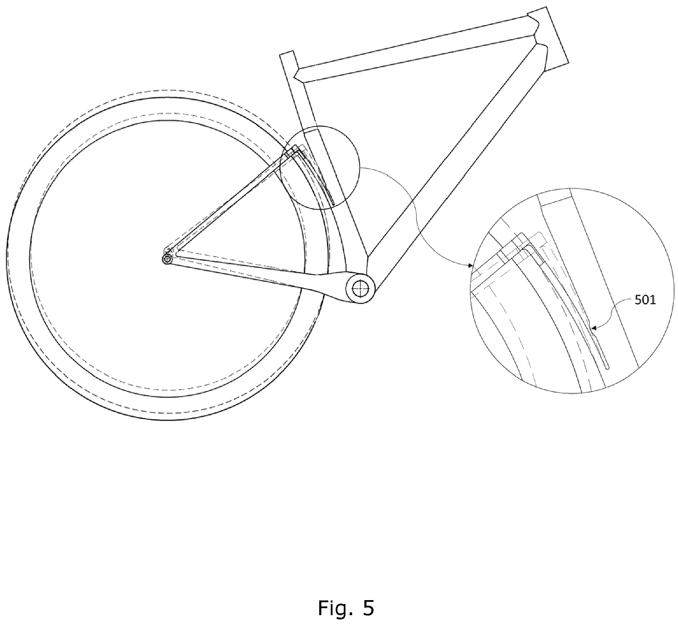

FIG 5 shows an example of said rear wheel suspension system, where said seat tube and said leaf spring are formed so that the effective spring length of said leaf spring is shortened as the said rear wheel suspension system compresses, by said leaf spring coming into contact with said seat tube at designated one or more locations 501, direct contact or indirect contact through intermediate bodies such as elastomer materials.

Thus, making for a progressive spring rate suspension system, this being a benefit for riders who want extra sensitive suspension for smaller hits, while having stiffer suspension deeper into the suspension travel.

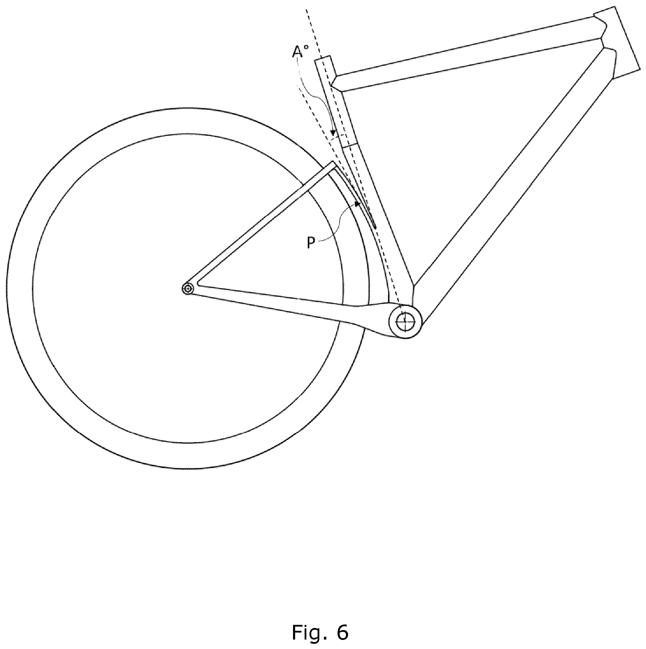

FIG 6 shows an example of said rear wheel suspension system, where more than 30% of the length of said top and bottom surfaces of said leaf spring is at any given location less than 12° from being parallel to said seat tube of said bike, an angle for point P on said leaf spring shown as A° in figure.

Thus, enabling tight packaging of said leaf spring along said seat tube while providing flex in the desired direction, perpendicularly towards said seat tube, to effectively achieve upwards flex of said flexible chainstays.

In one example of said rear wheel suspension system, more than 50% of the length of said top and bottom surfaces of said leaf spring is at any given location less than 12° from being parallel to said seat tube of said bike.

Thus, enabling tight packaging of said leaf spring along said seat tube while providing flex in the desired direction, perpendicularly towards said seat tube, to effectively achieve upwards flex of said flexible chainstays.

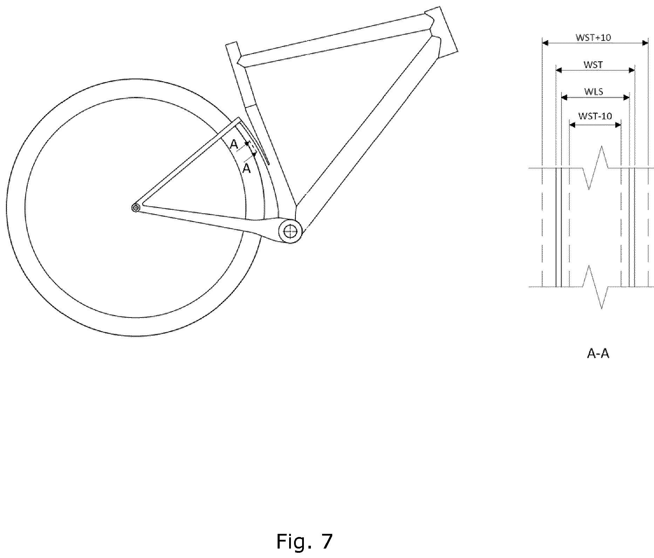

FIG 7 shows an example of said rear wheel suspension system, where the width of said leaf spring WLS at any given height above ground location is, when looked at from behind, within 10mm of the width of said seat tube WST in the same height above ground location, for clarity said rotably attached rear wheel and said seatstays are not shown on this figure, dotted lines showing the +10mm and -10mm widths from said seat tube.

Thus, achieving good flexural performance, i.e. being able to carry high weight over a large displacement at a good stiffness in the intended flex direction, and good lateral stiffness of said leaf spring with limited obtrusiveness and limited added air resistance.

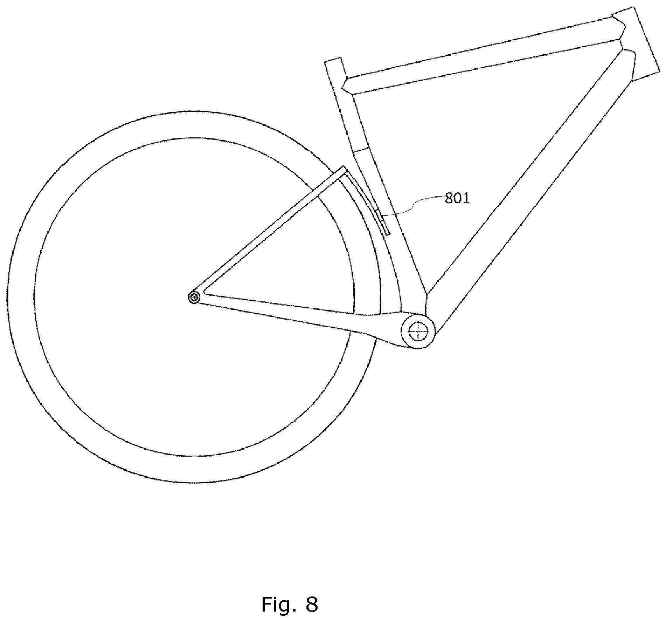

FIG 8 shows an example of said rear wheel suspension system, where said rear wheel suspension system further comprises one or more stiffness adjustment inserts 801, arranged and secured in place between said leaf spring and said seat tube, said one or more stiffness adjustment inserts being secured in place by any applicable fastening methods.

Thus, enabling riders of different body weight and/or with different riding preferences to shorten the effective spring length of said leaf spring and thus increasing the spring rate of said rear wheel suspension system.

In one example of said rear wheel suspension system, one or more of said one or more stiffness adjustment inserts are each contacting both said leaf spring and said seat tube when rider is stationary in riding position on said bike.

Thus, changing the initial stiffness of the said rear wheel suspension system.

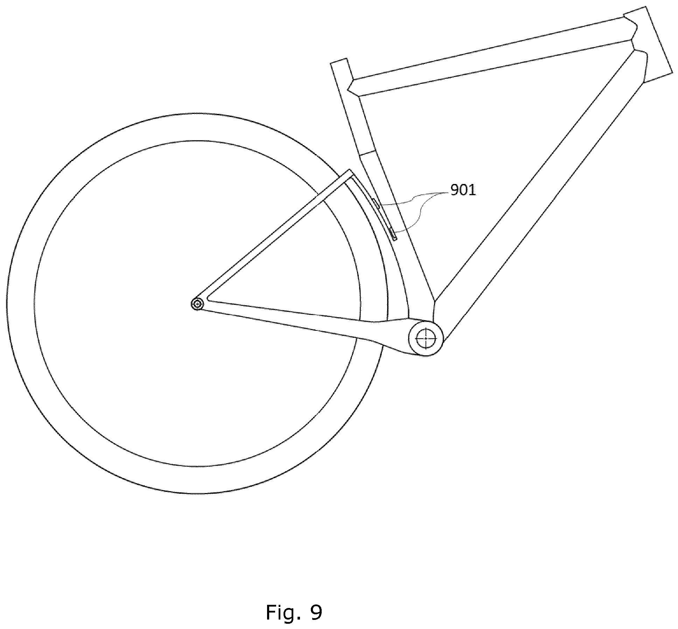

FIG 9 shows an embodiment of a rear wheel suspension system of a bike, where one or more of said one or more stiffness adjustment inserts 901 are each contacting only either said leaf spring or said seat tube when rider is stationary in riding position on said bike, then each contacting both said leaf spring and said seat tube when further compressed into its suspension travel.

Thus, when only partially reaching between said seat tube and said leaf spring said one or more stiffness adjustment inserts can make for a progressive spring rate suspension system, as the said one or more inserts can come into contact with both sides when the suspension system has partially compressed and thereby decreasing the effective spring length, this is a benefit for riders who want extra sensitive suspension for smaller hits, while having stiffer suspension deeper into the suspension travel.

In one embodiment, one or more of said one or more stiffness adjustment inserts are elevatable substantially perpendicularly to said top and bottom surfaces of said leaf spring; either secured to said leaf spring and adjustable in how far they are elevated towards said seat tube, or secured to said seat tube and adjustable in how far they are elevated towards said leaf spring, said one or more stiffness adjustment inserts being secured in place by any applicable fastening method.

Thus, when fully reaching the opposite side, with a rider stationary in riding position on said bike, shortening the effective spring length of said leaf spring and thus stiffening the suspension, making it suit riders preferring stiffer suspension, when partially reaching the opposite side the said elevatable stiffness adjustment insert can make for a progressive spring rate suspension system, as the said elevatable stiffness adjustment insert comes into contact with the opposite side when the suspension system has partially compressed, this is a benefit for riders who want extra sensitive suspension for smaller hits, while having stiffer suspension deeper into the suspension travel.

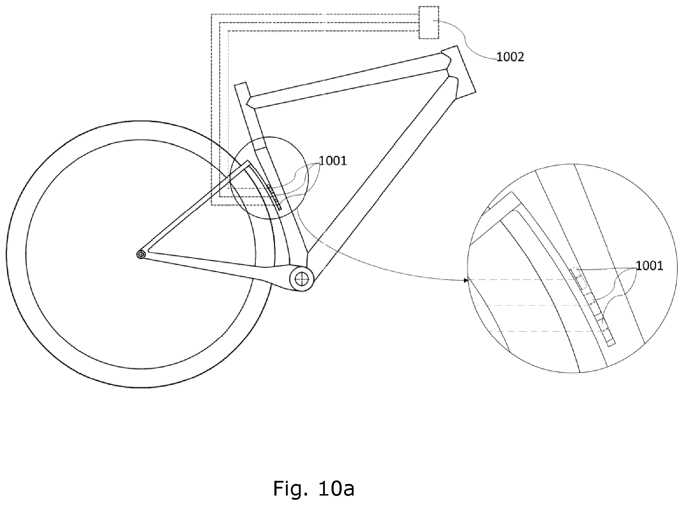

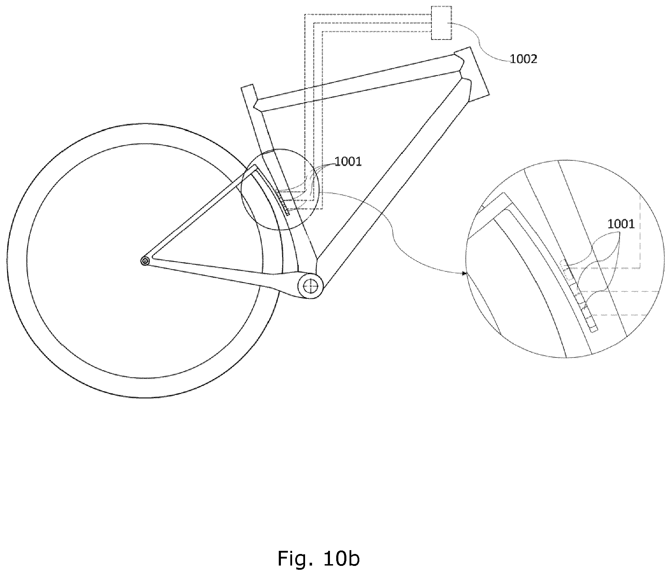

FIGs 10a and 10b show embodiments comprising said one or more elevatable stiffness adjustment inserts, where one or more of said one or more elevatable stiffness adjustment inserts 1001 can be elevated by actuators such as, but not limited to, hydraulic pistons, screw jacks, etc. Said actuators can, e.g. but not limited to, be manually operated via buttons, levers, turn knobs, dials or with a tool such as an allen key or screwdriver. Operation of said actuators can be via a cable- or hydraulically connected remote, furthermore, said actuators can e.g. be driven by electric motors, either controlled via an electrical wire connected remote or via a wireless remote. Said cable-, hydraulic-, electrical wire- or electrical wireless- remotes 1002 can for instance be mounted on the handlebar of said bike.

In one embodiment, said top and bottom surfaces of said leaf spring are substantially parallel to the adjacent surface of said seat tube on the lengthwise portion of said leaf spring that reaches from where said leaf spring and seat tube connect, at the root of said leaf spring, to a portion at least 30% upwards along the length of said leaf spring.

In one embodiment, said top and bottom surfaces of said leaf spring are substantially parallel to the adjacent surface of said seat tube on the lengthwise portion of said leaf spring that reaches from where said leaf spring and seat tube connect, at the root of said leaf spring, to a portion at least 30% upwards along the length of said leaf spring, in this said substantially parallel lengthwise portion of said top and bottom surfaces of said leaf spring the substantially perpendicular distance between said leaf spring and said seat tube being between 1mm and 40mm, such as 5-20mm.

Thus, creating "real estate" for slidable stiffness adjustment inserts between said leaf spring and said seat tube. Said slidable stiffness adjustment inserts able to slide upwards and downwards along said leaf spring and seat tube to tune the stiffness of said rear wheel suspension system.

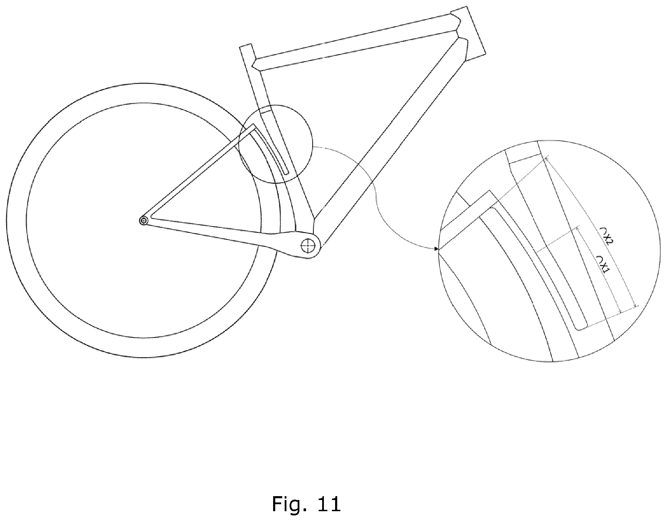

FIG 11 shows an example of said rear wheel suspension system, where said top and bottom surfaces of said leaf spring are substantially parallel to the adjacent surface of said seat tube on the lengthwise portion of said leaf spring that reaches from where said leaf spring and seat tube connect and from there 100*X1/X2 % along the length of said leaf spring, where X1 is the length of said substantial parallelism and X2 is the total length of said leaf spring.

In one example of said rear wheel suspension system, where said top and bottom surfaces of said leaf spring are substantially parallel to the adjacent surface of said seat tube on the lengthwise portion of said leaf spring that reaches from where said leaf spring and seat tube connect and from there 100*X1/X2 % along the length of said leaf spring, said leaf spring is substantially straight in said 100*X1/X2 % portion of the the length of said leaf spring.

Thus, allowing for straight linear actuators to be used, that would not be able to function along significantly curved leaf springs, such as screw jack actuators.

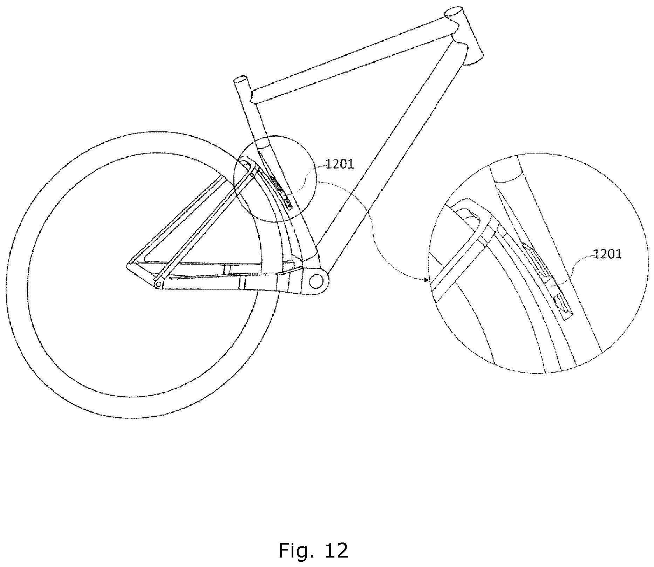

FIG 12 shows an embodiment, where one or more of said one or more stiffness adjustment inserts are slidable upwards and downwards along and between said leaf spring and said seat tube, said one or more slidable stiffness adjustment inserts 1201 being guided to prevent lateral movement, when rider is stationary in riding position on said bike said one or more slidable stiffness adjustment inserts can either reach entirely between said leaf spring and said seat tube, or reach partially between said leaf spring and said seat tube.

Thus, when reaching entirely between the said leaf spring and seat tube shortening the effective spring length of said leaf spring and thus stiffening the suspension, when partially reaching between the said leaf spring and seat tube the said one or more slidable stiffness adjustment inserts can make for a progressive spring rate suspension system, as the said insert achieves contacts with both said leaf spring and said seatpost when the suspension system has partially compressed, this is a benefit for riders who want extra sensitive suspension for smaller hits, while having stiffer suspension deeper into the suspension travel. Being slidable upwards/downwards can enable a rider to conveniently adjust his suspension according to his preferance.

In one embodiment comprising said one or more slidable stiffness adjustment inserts, said one or more slidable stiffness adjustment inserts are between 5-40mm long, i.e. in the upwards/downwards direction.

In one embodiment, comprising one or more slidable stiffness adjustment inserts, one or more of said one or more slidable stiffness adjustment inserts comprise a mechanically gripping texture A that interacts with a matching opposing mechanically gripping texture B on said leaf spring and or on said seat tube, said one or more mechanically gripping slidable stiffness adjustment inserts further comprising means of pressuring said opposing mechanically gripping textures A and B together, said pressuring may be done via, but not limited to, spring loading, screw tightening, etc.

Thus, preventing said one or more mechanically gripping slidable stiffness adjustment inserts from slipping unintentionally upwards or downwards along said leaf spring and seat tube during riding of said bike.

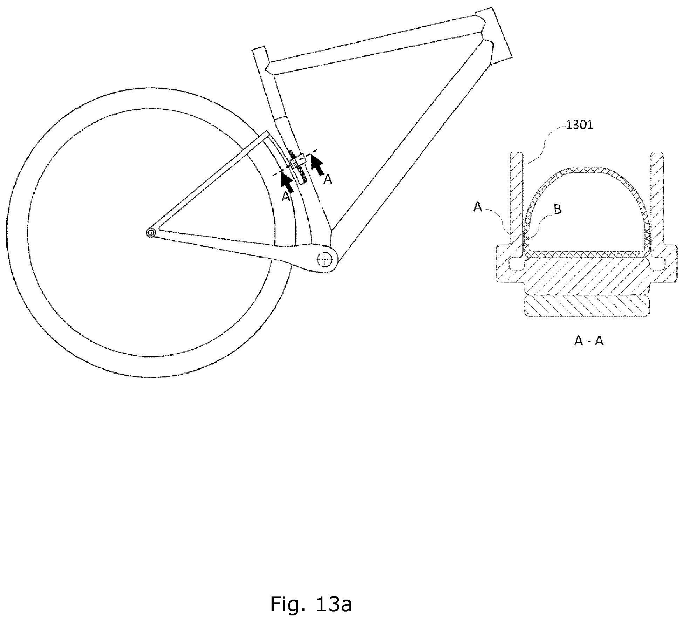

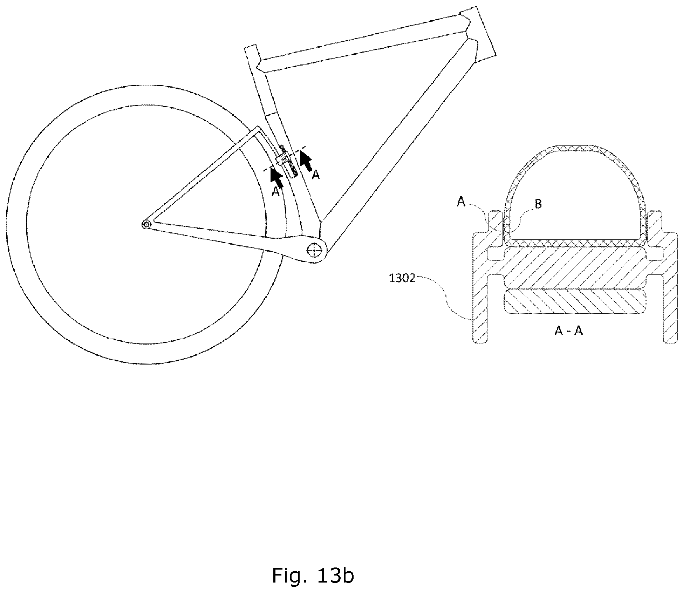

FIGs 13a and 13b show embodiments, where said pressuring of said opposing mechanically gripping textures A and B together is achieved through a spring-loaded lever, where pushing or pulling the lever releases said pressure and thus allows said slidable stiffness adjustment insert to be slid upwards or downwards while lever is pushed or pulled. FIG 13a shows a pull lever 1301, while FIG 13b shows a push lever 1302.

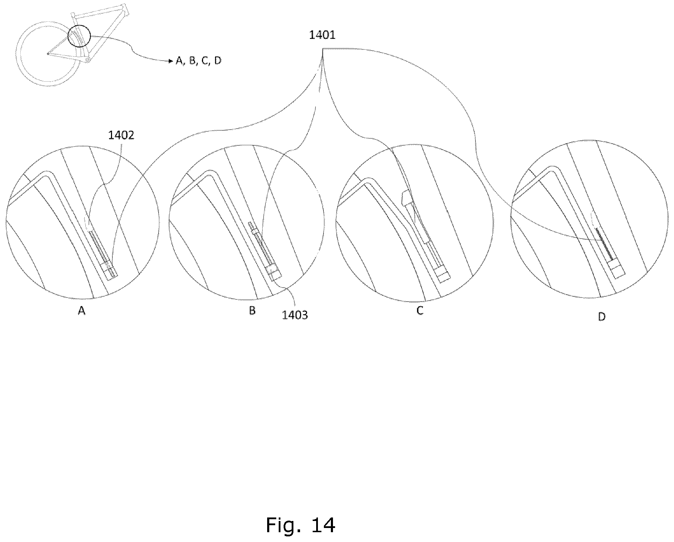

FIG 14 shows an embodiment comprising said one or more slidable stiffness adjustment inserts, said rear wheel suspension system further comprises a linear actuator 1401. Said linear actuator can e.g. be a screw jack, scissor drive, rack and pinion drive, hydraulic actuator, pneumatic actuator, pullable wire plus retracting spring combo, etc. shown here in configurations extending downwards from said one or more of said one or more slidable stiffness adjustment inserts and then connecting its other end, directly or via an intermediate body, to the remainder of said bike, e.g. said leaf spring, said seat tube or said root of said leaf spring. A, B, C, D versions show versions where said linear actuator is A = screw jack with driving mechanism 1402, B = screw jack with driving mechanism 1403, C = pneumatic or hydraulic actuator, D = pullable wire plus retracting spring combo.

In one embodiment comprising said linear actuator, said linear actuator is arranged in a groove that runs up and down the posterior surface of said seat tube (with the notable exclusion of a scissor drive linear actuator, as it would not easily fit in a groove).

Thus, moving said linear actuator out of the way from a flexing leaf spring, allowing more flex of said leaf spring than otherwise possible.

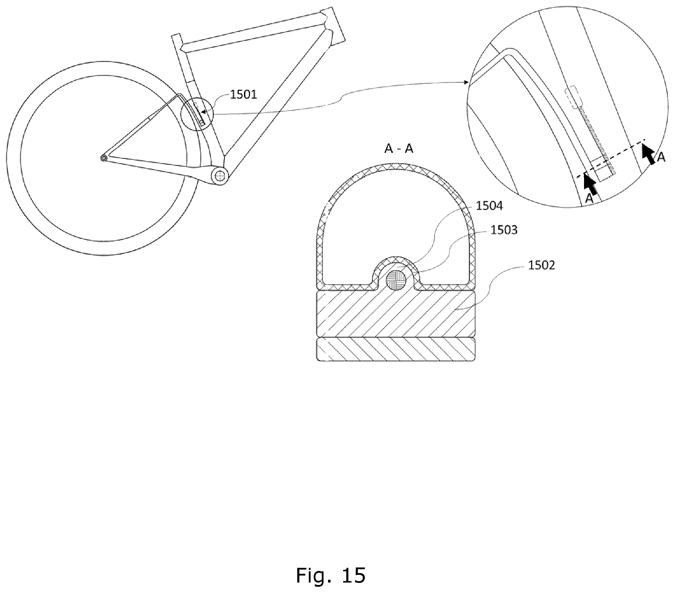

FIG 15 shows an embodiment comprising said screw jack linear actuator 1501, with slidable siffness adjustment insert 1502 where said linear actuator is arranged in a groove 1503 that runs up and down the posterior surface of said seat tube (with the notable exclusion of a scissor drive linear actuator, as it would not easily fit in a groove) said one or more of said one or more slidable stiffness adjustment inserts have an extrusion 1504 shaped to interact laterally with the surface of said groove.

Thus, simultaneously moving said linear actuator out of the way from a flexing leaf spring, allowing more flex than otherwise possible, and preventing lateral movement of said one or more slidable inserts.

In one embodiment, comprising said one or more slidable stiffness adjustment inserts, said linear actuator is a rack and pinion system that comprises a wheel or pinion mounted on one or more of said one or more slidable stiffness adjustment inserts that interacts with cogged or toothed racks/bars or rails that are fixed to said leaf spring and/or seat tube and extending upwards/downwards along said leaf spring and/or seat tube.

Thus, by turning said wheel or pinion driving said one or more slidable stiffness adjustment inserts upwards/downwards, said wheel or pinion moving upwards/downwards with said slidable stiffness adjustment insert, and thus altering the stiffness of said rear wheel suspension system by shortening/lengthening the effective spring length of said leaf spring.

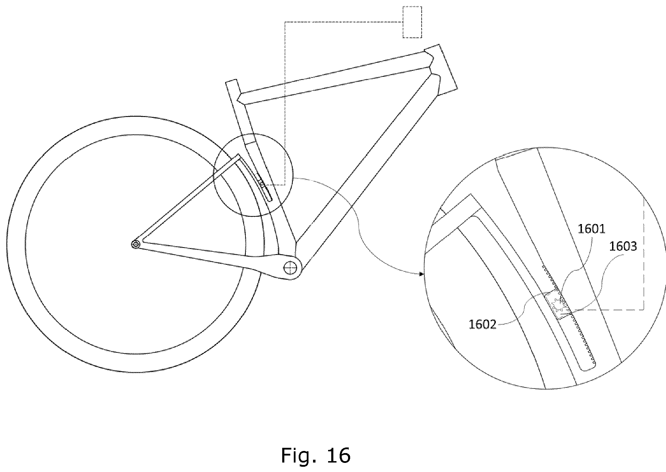

FIG 16 shows an embodiment, comprising said wheel or pinion 1601 on one or more of said one or more slidable stiffness adjustment inserts 1602, said wheel or pinion is connected to a drive mechanism 1603 operated via, but not limited to, a button, a lever, a turn knob, a dial or via a tool such as an allen key or screwdriver, operation can e.g. be via a cable- or hydraulically connected remote, or in the case when said drive mechanism is powered by one or more electric motors, either via electrical-wire connected remote or via wireless remote, said remotes 1604, weather they are connected by a cable-, hydraulic line, electrical wire- or electrical wireless communications, can for instance be mounted on the handlebar of said bike.

In one embodiment, comprising said one or more slidable stiffness adjustment inserts, said linear actuator is a rack and pinion system that comprises a wheel or pinion mounted to either said seat tube or said leaf spring, then interacting with cogged or toothed racks/bars or rails that are fixed to one or more of said one or more slidable inserts extending upwards/downwards along said leaf spring and/or seat tube.

Thus, by turning said wheel or pinion driving said one or more slidable stiffness adjustment inserts up/down, while said wheel or pinion does not move upwards/downwards itself relatively to said leaf spring and said seat tube, and thus altering the stiffness of said rear wheel suspension system by shortening/lengthening the effective spring length of said leaf spring.

In one embodiment, comprising said one or more slidable stiffness adjustment inserts, one or more of said one or more slidable stiffness adjustment inserts comprise one or more cogged or toothed racks/bars or rails that extend downwards from said one or more of said one or more slidable stiffness adjustment inserts substantially along said leaf spring and/or seat tube and then extending further through an opening at the junction of said leaf spring and said seat tube, at the root of said leaf spring, into a cavity in said seat tube, said leaf spring and/or said seat tube comprising a wheel or pinion that interacts with said one or more cogged or toothed bars or rails.

Thus, said one or more cogged or toothed racks/bars or rails are in this configuration, i.e. extending downwards, below said one or more of said one or more slidable stiffness adjustment inserts and thus outside of the most "active" flex zone of said leaf spring, that is located above said stiffness adjustment insert, thereby said bars or rails are not intruding into the aforementioned valuable flex zone, furthermore the said opening at the junction of said leaf spring and seat tube facilitates said cogged or toothed bars to move down below the junction of said leaf spring and said seat tube thus allowing associated said one or more slidable stiffness adjustment insert to be slid further down towards said junction of said leaf spring and said seat tube.

In one embodiment, comprising said one or more slidable stiffness adjustment inserts, one or more of said one or more slidable stiffness adjustment inserts comprise one or more cogged or toothed racks/bars or rails that extend downwards from said one or more of said one or more slidable stiffness adjustment inserts substantially along said leaf spring and/or seat tube and then extending further through an opening at the junction of said leaf spring and said seat tube, at the root of said leaf spring, into a cavity in said seat tube, said cavity in said seat tube comprising a wheel or pinion that interacts with said one or more cogged or toothed racks/bars or rails, said cavity in said seat tube also comprising an associated drive mechanism of said wheel or pinion.

Thus, by housing said wheel or pinion and associated drive mechanism in said cavity, aforementioned components can be neatly nested in said cavity, offering good protection from the elements and hits, good fastening options to said cavity of said seat tube, and last but not least, neatly keeping said components away from the valuable space used for flex of said leaf spring.

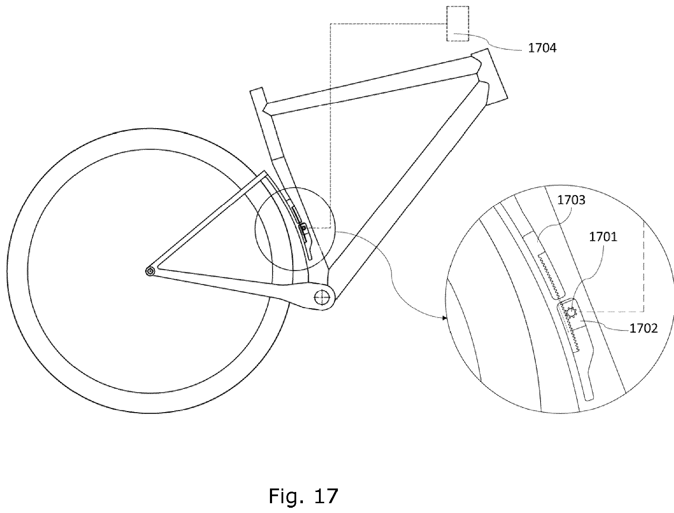

FIG 17 shows an embodiment, where said wheel or pinion 1701 located on; said leaf spring, said seat tube or in said cavity in said seat tube, is connected to a drive mechanism 1702 (driving said one or more of said one or more slidable stiffness adjustment inserts 1703) operated via, but not limited to, buttons, levers, turn knobs, dials or with a tool such as an allen key or screwdriver, operation can e.g. be via a cable- or hydraulically connected remote, or in the case when said drive mechanism is driven by one or more electric motors, either via electrical-wire connected remote or via wireless remote. Said remotes 1704, weather they are connected by a cable-, hydraulic line, electrical wire- or electrical wireless communications, can for instance be mounted on the handlebar of said bike.

In one embodiment comprising one or more slidable stiffness adjustment inserts, one or more of said one or more slidable stiffness adjustment inserts can be slid upwards/downwards by a screw jack linear actuator.

In one embodiment comprising one or more slidable stiffness adjustment inserts, one or more of said one or more slidable stiffness adjustment inserts can be slid upwards/downwards by a linear hydraulic actuator.

In one embodiment, said hydraulic linear actuators or said screw jack linear actuators can, e.g. but not limited to, be manually operated via buttons, levers, turn knobs, dials or with a tool such as an allen key or screwdriver. Operation of said actuators can be via a cable- or hydraulically connected remote. Furthermore, said actuators can e.g. be driven by electric motors, either controlled via an electrical wire connected remote or via a wireless remote. Said cable-, hydraulic-, electrical wire- or electrical wireless- remotes can for instance be mounted on the handlebar of said bike.

In one embodiment comprising said hydraulic linear actuator, said hydraulic linear actuator extends upwards from said one or more of said one or more slidable stiffness adjustment inserts and then connects its other end to either said leaf spring or said seat tube.

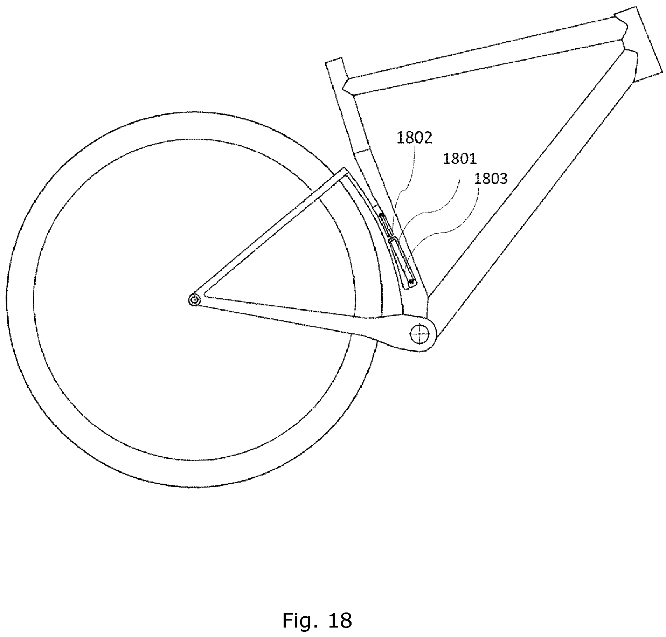

FIG 18 shows an embodiment comprising said hydraulic linear actuator 1801, said hydraulic linear actuator extends downwards from said one or more of said one or more slidable stiffness adjustment inserts and then extending further through an opening 1802 at the junction of said leaf spring and said seat tube, at the root of said leaf spring, into a cavity 1803 in said seat tube.

Thus, said hydraulic linear actuator is in this configuration, i.e. extending downwards, below said one or more of said one or more slidable stiffness adjustment inserts and thus outside of the most "active" flex zone of said leaf spring, that is located above said stiffness adjustment insert, thereby said hydraulic linear actuator is not intruding into the aforementioned valuable flex zone, furthermore the said opening at the junction of said leaf spring and seat tube facilitates said hydraulic linear actuator to move down below the junction of said leaf spring and said seat tube thus allowing associated said one or more slidable stiffness adjustment insert to be slid further down towards said junction of said leaf spring and said seat tube.

In one embodiment comprising said screw jack linear actuator, said screw jack linear actuator extends upwards from said one or more of said one or more slidable stiffness adjustment inserts and then connects its other end to either said leaf spring or said seat tube.

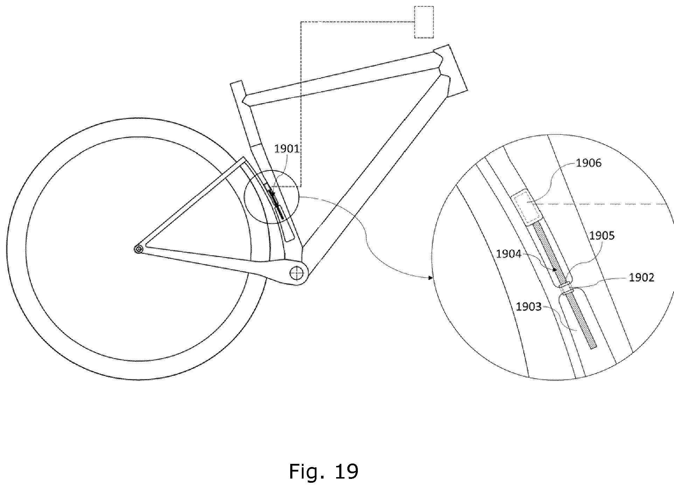

FIG 19 shows an embodiment comprising said screw jack linear actuator 1901, said screw jack linear actuator extends downwards from said one or more of said one or more slidable stiffness adjustment inserts and then extending further through an opening 1902 at the junction of said leaf spring and said seat tube, at the root of said leaf spring, into a cavity 1903 in said seat tube, where threads 1904 of said screw jack linear actuator interact with a threaded body 1905 mounted in the said junction area of said leaf spring and said seat tube, driving mechanism 1906 of said screw jack linear actuator can e.g. be located in said one or more of said one or more slidable inserts.

Thus, said screw jack linear actuator is in this configuration, i.e. extending downwards, below said one or more of said one or more slidable stiffness adjustment inserts and thus outside of the most "active" flex zone of said leaf spring, that is located above said stiffness adjustment insert, thereby said screw jack linear actuator is not intruding into the aforementioned valuable flex zone, furthermore the said opening at the junction of said leaf spring and seat tube facilitates said screw jack linear actuator to move down below the junction of said leaf spring and said seat tube thus allowing associated said one or more slidable stiffness adjustment insert to be slid further down towards said junction of said leaf spring and said seat tube.

In one embodiment, said cavity in said seat tube is protected by removable covers on its left and/or right sides.

In one embodiment, said cavity in said seat tube is made up by two parts extending upwards/downwards, one of the parts being posterior to said cavity in said seat tube and the other part being anterior to said cavity in said seat tube, the two parts connecting together above and below said cavity in said seat tube.

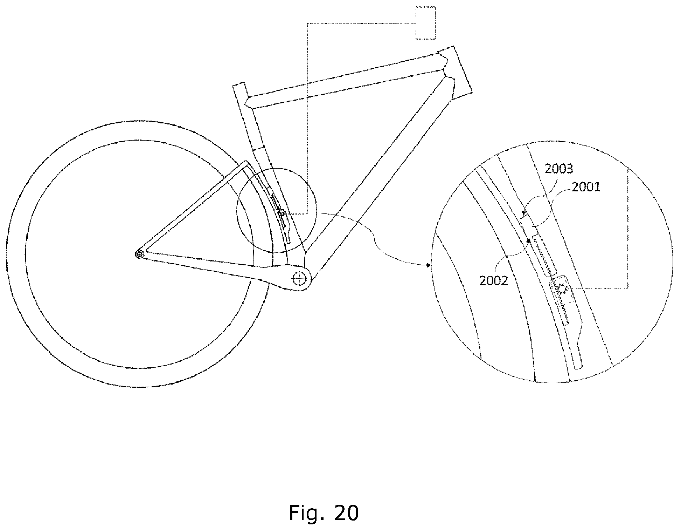

FIG 20 shows an embodiment, comprising one or more stiffness adjustment inserts, where one or more of said one or more stiffness adjustment inserts 2001 are formed so that the thickness of said one or more of said one or more stiffness adjustment inserts 2001 at the end 2002 that is closer to the junction of said seat tube and said leaf spring is such that, when rider is stationary in riding position on said bike, it reaches entirely between said leaf spring and said seat tube, while its thickness at the end 2003 further away from the intersection of said leaf spring and seat tube is such that it lacks up to 5mm to reach entirely between said leaf spring and seat tube.

This can make each of said one or more of said one or more stiffness adjustment inserts provide more than one spring rate for said rear wheel suspension system, i.e. providing progressive stiffness. Stiffness ramping up as the end further away from the intersection of said leaf spring and seat tube comes in contact with both said leaf spring and seat tube, as the said suspension system has been partially compressed.

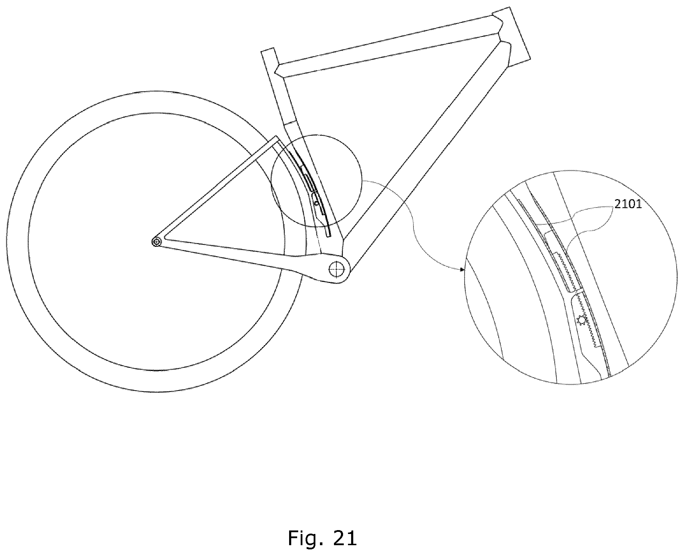

FIG 21 shows an embodiment comprising said one or more stiffness adjustment inserts, where said rear wheel suspension system further comprises a liner material 2101 fully or partially covering surfaces of said leaf spring and or said seat tube that otherwise could come into contact with each other and or into contact with one or more of said one or more stiffness adjustment inserts, said liner material can be made of, but is not limited to, a plastic or elastomer material, said liner material is defined to become a part of the body it is attached to, whether it being said leaf spring or said seat tube.

Thus, protecting said leaf spring and/or said seat tube from friction and/or wear and potentially providing a smoother engagement of said one or more stiffness adjustment inserts.

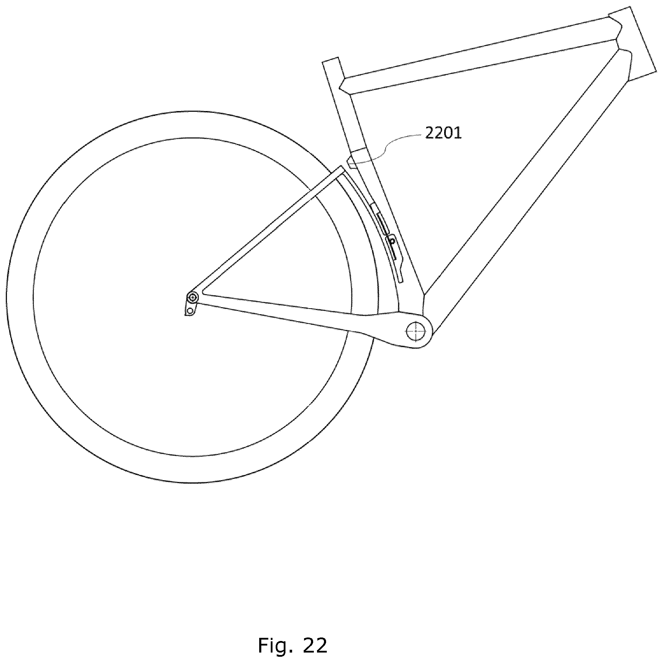

FIG 22 shows an embodiment, where an elastomer bump stop 2201 is located and secured in place between said leaf spring and said seat tube.

Thus, enabling a rear wheel suspension system design with a relatively low spring rate without it resulting in harsh bottom outs.

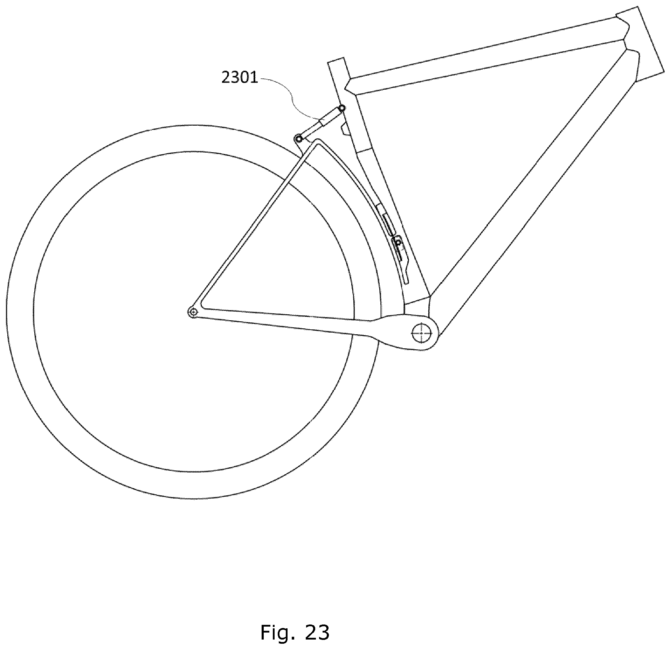

FIG 23 shows an example of said rear wheel suspension system, where said rear wheel suspension system further comprises a forwardly extending damper 2301 arranged from said seatstays to said seat tube.

Thus, further control of the dynamics of the suspension is provided by means of absorbing compression and/or rebound energy, this becomes desirable when said rear wheel suspension system is used to achieve relatively long travel suspension. As a rough reference, this is often considered to happen when suspension travel reaches approximately 40-70mm.

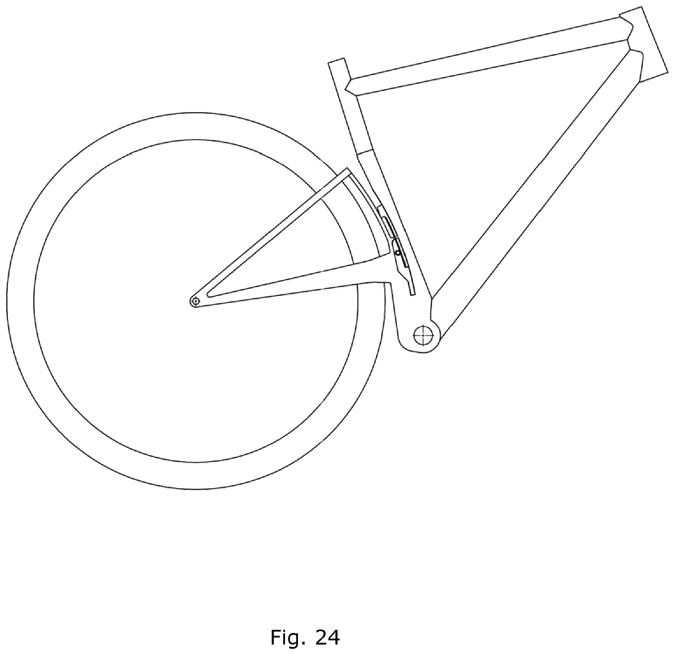

FIG 24 shows an embodiment, where said left side flexible chainstay and said right side flexible chainstay connect to said seat tube between 100mm and 250mm above the rotational axis of the bottom bracket area of said bike, both said left side flexible chainstay and said right side flexible chainstay connecting to said seat tube at substantially the same height.

Thus, potentially freeing up space to fit wider tires on said bike without said tires interfering with crankset of said bike, and furthermore changing the movement path of the suspended said rear wheel so that the movemement is more directed rearwards than it would otherwise be if chainstays were connected lower to said seat tube, this can help with small bump compliance and it can also help reducing pedal bob, as chain tension can work against the suspension movement of said rear wheel suspension system in this configuration.

In one embodiment, said one or more stiffness adjustment inserts have their widths extending at least essentially between the left and right edge of said leaf spring.

Thus, an adjustable rear wheel suspension system is provided that does not roll excessively to the sides when the rider is pedaling or maneuvering.

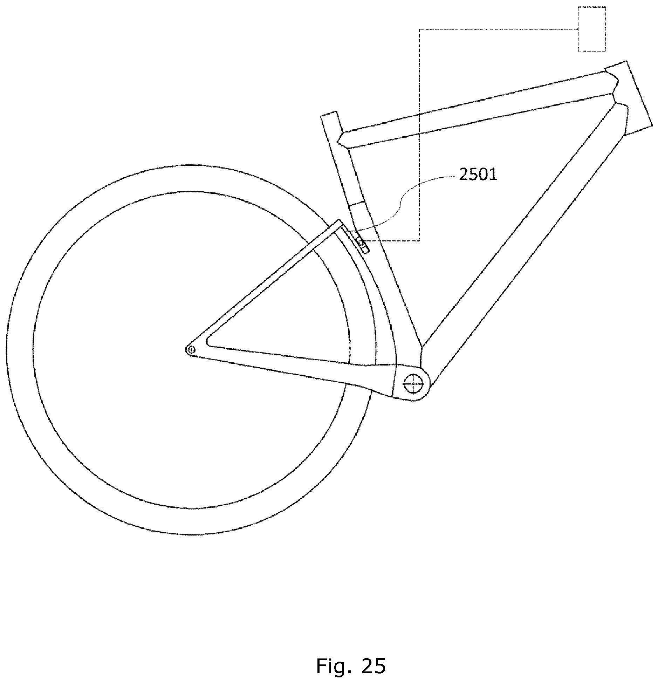

FIG 25 shows an example of an embodiment, where said leaf spring 2501 is relatively short, but still falling under the scope of the present invention.

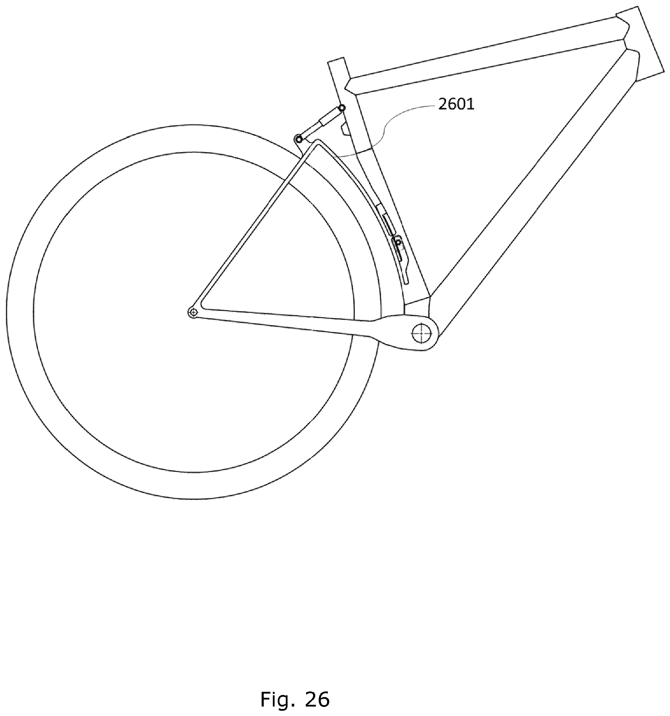

FIG 26 shows an example of said rear wheel suspension system, where said leaf spring 2601 is relatively long.

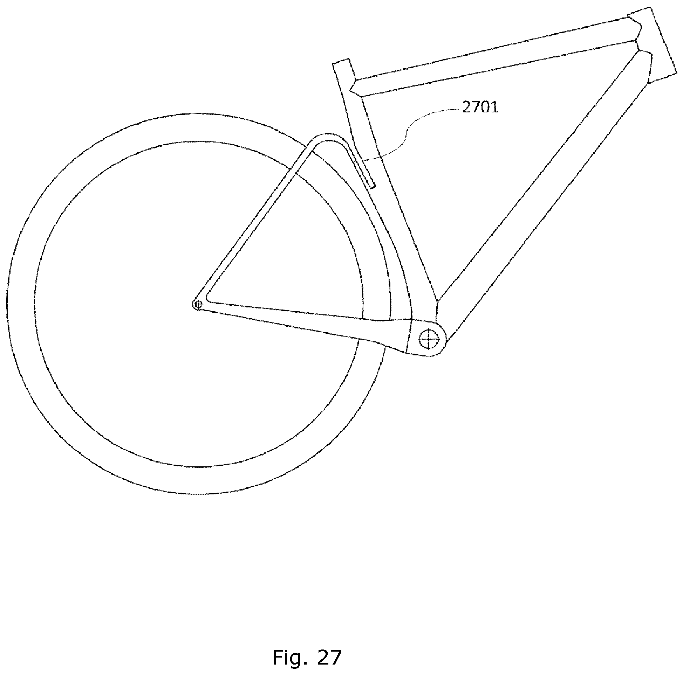

FIG 27 shows an example of said rear wheel suspension system, where the shape of said leaf spring 2701 is slightly variated.

## Claims

1. A bike comprising:
• a rear wheel (109) with a maximum radius (R), the rear wheel defining a center plane (CP) perpendicular to the rotational axis of the rear wheel and coincident with the ground contact of the rear wheel when said bike is upright on level ground,
• a rear wheel suspension system (101),
the rear wheel suspension system (101) comprising:
• a seat tube (104),
• a bottom bracket shell (106) defining a rotational axis (105) extending there through in direction transverse to the said center plane (CP), said bottom bracket shell (106) forming part of or being securely fixed to said seat tube (104),
• a left side flexible chainstay (102) and a right side flexible chainstay (103), extending longitudinally on either side of said center plane (CP), each with its forward end configured for attaching to a lower portion of the seat tube (104) of said bike less than 250mm from said rotational axis (105) of a bottom bracket shell (106),
• a left side seatstay (107) and a right side seatstay (108), each having lower end areas connected to posterior end areas of each of said flexible chainstays (102, 103), and each of said seatstays (107, 108) extending upwardly and forwardly with its opposite end being configured to extend to a position which is outside of the maximum radius (R) of the rotably attached rear wheel (109) and at a distance from an upper portion of said seat tube (104) of said bike,
• a set of dropouts (110) located where said flexible chainstays (102, 103) and said seatstays (107, 108) interconnect for rotably supporting said rear wheel of said bicycle,
• a leaf spring (111) interconnecting said seatstays (107, 108) and said seat tube (104), wherein one end of the leaf spring (111) is connected to the upper end area of said seatstays (107, 108), and wherein the leaf spring (111) extends downwardly from its point of connection to the upper end area of the seatstays (107, 108) to a point of connection to said seat tube (104) of said bicycle, said leaf spring (111) defining opposite top and bottom surfaces extending transversely to said center plane (CP), wherein the said leaf spring (111) is arranged at a distance D to the seat tube (104) in a direction perpendicular to said top and bottom surfaces of said leaf spring (111) to allow flex of said leaf spring (111) towards said seat tube (104) and thus vertical flex of said flexible chainstays (102, 103),
• one or more stiffness adjustment inserts (901, 1001, 1201, 2001), arranged and secured in place between said leaf spring (111) and said seat tube (104),
wherein the seatstays (107, 108) are connected to the seat tube (104) solely via the leaf spring (111) and the one or more stiffness adjustment inserts (901, 1001, 1201, 2001), with no other elements interconnecting the seat stays (107, 108) and the seat tube (104) **characterized in that**
one or more of said one or more stiffness adjustment inserts (901, 1001, 1201, 2001) are slidable upwards and downwards along and between said leaf spring (111) and seat tube (104) or elevatable substantially perpendicularly to said top and bottom surfaces of said leaf spring (111).

2. The bike according to claim 1, where said left side flexible chainstay (102) and said right side flexible chainstay (103), said left side seatstay (107) and said right side seatstay (108), said leaf spring (111) and said seat tube (104) of said rear wheel suspension system are all a part of the same non-disassemblable body.

3. The bike according to claim 1 or 2, where said seatstays (107, 108) are at least 30% thinner on average in the majority of their upmost lengthwise third than the lower at least 2/3^{rd} lengthwise remainder of said seatstays (107, 108) are on average.

4. The bike according to any of the preceding claims, where said seat tube (104) and said leaf spring (111) are formed so that the effective spring length of said leaf spring (111) is shortened as the said rear wheel suspension system compresses, by said leaf spring (111) coming into contact with said seat tube (104) at designated one or more locations.

5. The bike according to any of the preceding claims, where more than 30% of the length of said top and bottom surfaces of said leaf spring (111) is at any given location less than 12° from being parallel to said seat tube (104) of said bike.

6. The bike according to any of the preceding claims, where said top and bottom surfaces of said leaf spring (111) are substantially parallel to an adjacent surface of said seat tube (104) on the lengthwise portion of said leaf spring (111) that reaches from where said leaf spring (111) and seat tube (104) connect, at the root of said leaf spring (111), to a portion at least 30% upwards along the length of said leaf spring (111), in this said substantially parallel lengthwise portion of said leaf spring (111) the substantially perpendicular distance between said leaf spring (111) and said seat tube (104) being between 1mm and 40mm, such as 5-20mm.

7. The bike according to any of the preceding claims, where one or more of said one or more stiffness adjustment inserts (901, 1001, 1201, 2001) are slidable upwards and downwards along and between said leaf spring (111) and said seat tube (104), said one or more slidable stiffness adjustment inserts (901, 1001, 1201, 2001) being guided to prevent lateral movement.

8. The bike according to claim 7, where one or more of said one or more slidable stiffness adjustment inserts (901, 1001, 1201, 2001) comprise a mechanically gripping texture (A) that interacts with a matching opposing mechanically gripping texture (B) on said leaf spring (111) and or on said seat tube (104), said one or more mechanically gripping slidable stiffness adjustment inserts (901, 1001, 1201, 2001) further comprising means of pressuring said opposing mechanically gripping textures (A and B) together.

9. The bike according to claim 7 or 8, comprising a linear actuator for sliding one or more of said one or more slidable stiffness adjustment inserts (901, 1001, 1201, 2001) upwardly and downwardly.

10. The bike according to claim 9, where said linear actuator is arranged in a groove that runs up and down the posterior surface of said seat tube, said one or more of said one or more slidable stiffness adjustment inserts (901, 1001, 1201, 2001) have an extrusion shaped to interact laterally with the surface of said groove.

11. The bike according to any of the preceding claims, where one or more of said one or more stiffness adjustment inserts (901, 1001, 1201, 2001) are formed so that the thickness of said one or more of said one or more stiffness adjustment inserts (901, 1001, 1201, 2001) at the end that is closer to the root of said leaf spring (111) is such that, when rider is stationary in riding position on said bike, it reaches entirely between said leaf spring (111) and said seat tube (104), while its thickness at the end further away from the root of said leaf spring (111) is such that it lacks up to 5mm to reach entirely between said leaf spring (111) and seat tube (104).

12. The bike according to any of the preceding claims, wherein said one or more slidable stiffness adjustment inserts (901, 1001, 1201, 2001) are between 5-40mm long in the upwards/downwards direction.

13. The bike according to any of the preceding claims, wherein said one or more stiffness adjustment inserts (901, 1001, 1201, 2001) have their widths extending at least essentially between the left and right edge of said leaf spring (111).

## Patentansprüche

1. Fahrrad, umfassend:
• ein Hinterrad (109) mit einem maximalen Radius (R), wobei das Hinterrad eine Mittelebene (CP) bildet, die senkrecht zur Drehachse des Hinterrads verläuft und mit der Bodenkontaktfläche des Hinterrads zusammenfällt, wenn das Fahrrad aufrecht auf ebenem Boden steht,
• ein Hinterradfederungssystem (101),
wobei das Hinterradfederungssystem (101) umfasst:
• ein Sattelrohr (104),
• ein Tretlagergehäuse (106), das eine Drehachse (105) definiert, die sich quer zur Mittelebene (CP) erstreckt, wobei das Tretlagergehäuse (106) Teil des Sattelrohrs (104) ist oder fest mit diesem verbunden ist,
• eine linksseitige flexible Kettenstrebe (102) und eine rechtsseitige flexible Kettenstrebe (103), die sich längs zu beiden Seiten der Mittelebene (CP) erstrecken, wobei jede mit ihrem vorderen Ende jeweils zum Befestigen an einem unteren Teil des Sattelrohrs (104) des Fahrrads mit weniger als 250 mm von der Drehachse (105) eines Tretlagergehäuses (106) entfernt konfiguriert ist,
• eine linksseitige Sitzstrebe (107) und eine rechtsseitige Sitzstrebe (108), wobei jede einen unteren Endbereich jeweils mit dem hinteren Endbereich der flexiblen Kettenstreben (102, 103) verbunden aufweist und wobei jede der Sitzstreben (107, 108) sich nach oben und vorne erstreckt, wobei ihr gegenüberliegendes Ende so konfiguriert ist, dass es sich bis zu einer Position erstreckt, die außerhalb des maximalen Radius (R) des drehbar angebrachten Hinterrads (109) und in einem gewissen Abstand vom oberen Teil des Sattelrohrs (104) des Fahrrads liegt,
• einen Satz Ausfallenden (110) an der Verbindungsstelle der flexiblen Kettenstreben (102, 103) und der Sitzstreben (107, 108) zur drehbaren Lagerung des Hinterrads des Fahrrads,
• eine Blattfeder (111), die die Sitzstreben (107, 108) und das Sattelrohr (104) verbindet, wobei ein Ende der Blattfeder (111) mit dem oberen Endbereich der Sitzstreben (107, 108) verbunden ist und wobei die Blattfeder (111) sich von ihrem Verbindungspunkt mit dem oberen Endbereich der Sitzstreben (107, 108) nach unten bis zu einem Verbindungspunkt mit dem Sattelrohr (104) des Fahrrads erstreckt, wobei die Blattfeder (111) eine gegenüberliegende Ober- und Unterseite bildet, die sich quer zur Mittelebene (CP) erstrecken, wobei die Blattfeder (111) in einem Abstand D zum Sattelrohr (104) in einer Richtung senkrecht zu der Ober- und der Unterseite der Blattfeder (111) angeordnet ist, um eine Biegung der Blattfeder (111) in Richtung des Sattelrohrs (104) und damit eine vertikale Biegung der flexiblen Kettenstreben (102, 103) zu ermöglichen,
• einen oder mehrere Steifigkeitsanpassungseinsatz/-einsätze (901, 1001, 1201, 2001), die zwischen der Blattfeder (111) und dem Sattelrohr (104) angeordnet und befestigt sind,
wobei die Sitzstreben (107, 108) ausschließlich über die Blattfeder (111) und einen oder mehrere Steifigkeitsanpassungseinsatz/-einsätze (901, 1001, 1201, 2001) mit dem Sattelrohr (104) verbunden sind, ohne dass weitere Elemente die Sitzstreben (107, 108) mit dem Sattelrohr (104) verbinden,
**dadurch gekennzeichnet, dass**
einer oder mehrere des einen oder der mehreren Steifigkeitsanpassungseinsatzes/-einsätze (901, 1001, 1201, 2001) entlang und zwischen der Blattfeder (111) und dem Sattelrohr (104) nach oben und unten verschiebbar oder im Wesentlichen senkrecht zur Ober- und zur Unterseite der Blattfeder (111) anhebbar ist/sind.

2. Fahrrad nach Anspruch 1, wobei die linke flexible Kettenstrebe (102) und die rechte flexible Kettenstrebe (103), die linke Sitzstrebe (107) und die rechte Sitzstrebe (108), die Blattfeder (111) und das Sattelrohr (104) der Hinterradfederung alle ein Teil desselben nicht zerlegbaren Rahmens sind.

3. Fahrrad nach Anspruch 1 oder 2, wobei die Sitzstreben (107, 108) im Großteil ihres obersten Längsdrittels durchschnittlich mindestens 30% dünner sind als die unteren, mindestens zweidrittellangen, verbleibenden Sitzstreben (107, 108).

4. Fahrrad nach einem der vorhergehenden Ansprüche, wobei das Sattelrohr (104) und die Blattfeder (111) so geformt sind, dass sich die effektive Federlänge der Blattfeder (111) beim Einfedern der Hinterradfederung verkürzt, indem die Blattfeder (111) an einer oder mehreren bestimmten vorgesehenen Stellen mit dem Sattelrohr (104) in Kontakt kommt.

5. Fahrrad nach einem der vorhergehenden Ansprüche, wobei mehr als 30% der Länge der Ober- und der Unterseite der Blattfeder (111) an einer beliebigen Stelle weniger als 12° von der Parallelität zum Sattelrohr (104) des Fahrrads abweichen.

6. Fahrrad nach einem der vorhergehenden Ansprüche, wobei die Ober- und die Unterseite der Blattfeder (111) im Wesentlichen parallel zu einer angrenzenden Oberfläche des Sattelrohrs (104) auf dem Längsabschnitt der Blattfeder (111) verlaufen, der von der Verbindung zwischen Blattfeder (111) und Sattelrohr (104) an der Wurzel der Blattfeder (111) bis zu einem Abschnitt reicht, der mindestens 30% der Länge der Blattfeder (111) nach oben verläuft, wobei in diesem im Wesentlichen parallelen Längsabschnitt der Blattfeder (111) der im Wesentlichen senkrechte Abstand zwischen Blattfeder (111) und Sattelrohr (104) zwischen 1 mm und 40 mm, beispielsweise 5-20 mm, beträgt.

7. Fahrrad nach einem der vorhergehenden Ansprüche, wobei einer oder mehrere des einen oder der mehreren Steifigkeitsanpassungseinsatzes/-einsätze (901, 1001, 1201, 2001) entlang nach oben und unten und zwischen der Blattfeder (111) und dem Sattelrohr (104) verschiebbar ist/sind, wobei der eine oder die mehreren Steifigkeitsanpassungseinsatz/-einsätze (901, 1001, 1201, 2001) so geführt ist/sind, dass eine seitliche Bewegung verhindert wird.

8. Fahrrad nach Anspruch 7, wobei einer oder mehrere des einen oder der mehreren verschiebbaren Steifigkeitsanpassungseinsatzes/-einsätze (901, 1001, 1201, 2001) eine mechanisch greifende Struktur (A) aufweist(en), die mit einer passenden gegenüberliegenden mechanisch greifenden Struktur (B) an der Blattfeder (111) und/oder am Sattelrohr (104) zusammenwirkt, wobei der eine oder die mehreren verschiebbaren Steifigkeitsanpassungseinsatz/-einsätze (901, 1001, 1201, 2001) Mittel zum Zusammenpressen der gegenüberliegenden mechanisch greifenden Strukturen (A und B) umfasst(en).

9. Fahrrad nach Anspruch 7 oder 8, umfassend einen Linearstellantrieb zum Auf- und Abschieben eines oder mehrerer des einen oder der mehreren der verschiebbaren Steifigkeitsanpassungseinsatzes/-einsätze (901, 1001, 1201, 2001).

10. Fahrrad nach Anspruch 9, wobei der Linearantrieb in einer Nut angeordnet ist, die an der Rückseite des Sattelrohrs auf und ab verläuft, und wobei der eine oder die mehreren verschiebbaren Steifigkeitsanpassungseinsatz/-einsätze (901, 1001, 1201, 2001) eine Extrusion aufweist(en), die so geformt ist, dass sie seitlich mit der Oberfläche der Nut zusammenwirkt.

11. Fahrrad nach einem der vorhergehenden Ansprüche, wobei einer oder mehrere des einen oder der mehreren Steifigkeitsanpassungseinsatzes/-einsätze (901, 1001, 1201, 2001) so geformt ist/sind, dass die Dicke des einen oder der mehreren des einen oder der mehreren Steifigkeitsanpassungseinsatzes/-einsätze (901, 1001, 1201, 2001) an dem der Wurzel der Blattfeder (111) näher gelegenen Ende so bemessen ist, dass sie, wenn der Fahrer auf dem Fahrrad in Fahrposition anfahrbereit nicht rollend steht, vollständig zwischen Blattfeder (111) und Sattelrohr (104) hineinreicht, während ihre Dicke am der Wurzel der Blattfeder (111) weiter entfernten Ende so bemessen ist, dass bis zu 5 mm fehlen, um vollständig zwischen Blattfeder (111) und Sattelrohr (104) hineinzureichen.

12. Fahrrad nach einem der vorhergehenden Ansprüche, wobei der eine oder die mehreren verschiebbaren Steifigkeitsanpassungseinsatz/-einsätze (901, 1001, 1201, 2001) in der Aufwärts-/Abwärtsrichtung von 5 bis 40 mm lang ist/sind.

13. Fahrrad nach einem der vorhergehenden Ansprüche, wobei der eine oder die mehreren verschiebbaren Steifigkeitsanpassungseinsatz/-einsätze (901, 1001, 1201, 2001) seine/ihre Breite so gestaltet aufweist(en), dass sie sich mindestens im Wesentlichen zwischen der linken und rechten Kante der Blattfeder (111) erstreckt.

## Revendications

1. Vélo comprenant :
• une roue arrière (109) de rayon maximal (R), la roue arrière définissant un plan central (CP) perpendiculaire à l'axe de rotation de la roue arrière et coïncidant avec le contact au sol de la roue arrière quand ledit vélo est debout sur un sol plat,
• un système de suspension de roue arrière (101),
le système de suspension de roue arrière (101) comprenant :
• un tube de selle (104),
• un boîtier de pédalier (106) définissant un axe de rotation (105) qui le traverse dans une direction transversale audit plan central (CP), ledit boîtier de pédalier (106) faisant partie dudit tube de selle (104) ou y étant solidement fixé,
• une base flexible gauche (102) et une base flexible droite (103), qui s'étendent longitudinalement de part et d'autre dudit plan central (CP), chacune avec son extrémité avant configurée pour s'attacher à une portion inférieure du tube de selle (104) dudit vélo à moins de 250 mm dudit axe de rotation (105) d'un boîtier de pédalier (106),
• un hauban gauche (107) et un hauban droit (108), ayant chacun des zones d'extrémité inférieure connectées aux zones d'extrémité postérieure de chacune desdites bases flexibles (102, 103), et chacun desdits haubans (107, 108) s'étendant vers le haut et vers l'avant, son extrémité opposée étant configurée pour s'étendre jusqu'à une position située à l'extérieur du rayon maximal (R) de la roue arrière (109) attachée de manière rotative et à distance d'une portion supérieure dudit tube de selle (104) dudit vélo,
• un ensemble de pattes (110) situées à l'endroit où lesdites bases flexibles (102, 103) et lesdits haubans (107, 108) s'interconnectent pour supporter de manière rotative ladite roue arrière dudit vélo,
• un ressort à lame (111) interconnectant lesdits haubans (107, 108) et ledit tube de selle (104), dans lequel une extrémité du ressort à lame (111) est connectée à la zone d'extrémité supérieure desdits haubans (107, 108), et dans lequel le ressort à lame (111) s'étend vers le bas depuis son point de connexion à la zone d'extrémité supérieure des haubans (107, 108) jusqu'à un point de connexion avec ledit tube de selle (104) dudit vélo, ledit ressort à lame (111) définissant des surfaces supérieure et inférieure opposées qui s'étendent transversalement audit plan central (CP), dans lequel ledit ressort à lame (111) est agencé à une distance D du tube de selle (104) dans une direction perpendiculaire auxdites surfaces supérieure et inférieure dudit ressort à lame (111) pour permettre une flexion dudit ressort à lame (111) vers ledit tube de selle (104) et ainsi une flexion verticale desdites bases flexibles (102, 103),
• un ou plusieurs inserts de réglage de rigidité (901, 1001, 1201, 2001), agencés et fixés en place entre ledit ressort à lame (111) et ledit tube de selle (104),
dans lequel les haubans (107, 108) sont connectés au tube de selle (104) uniquement via le ressort à lame (111) et lesdits un ou plusieurs inserts de réglage de rigidité (901, 1001, 1201, 2001), sans aucun autre élément interconnectant les haubans (107, 108) et le tube de selle (104),
**caractérisé en ce que**
un ou plusieurs desdits un ou plusieurs inserts de réglage de rigidité (901, 1001, 1201, 2001) peuvent coulisser vers le haut et vers le bas le long et entre ledit ressort à lame (111) et le tube de selle (104) ou peuvent être levés de manière substantiellement perpendiculaire auxdites surfaces supérieure et inférieure dudit ressort à lame (111).

2. Vélo selon la revendication 1, dans lequel ladite base flexible côté gauche (102) et ladite base flexible côté droit (103), ledit hauban côté gauche (107) et ledit hauban côté droit (108), ledit ressort à lame (111) et ledit tube de selle (104) dudit système de suspension de roue arrière font tous partie du même corps non démontable.

3. Vélo selon la revendication 1 ou 2, dans lequel lesdits haubans (107, 108) sont au moins 30 % plus minces en moyenne sur la majorité de leur tiers longitudinal le plus élevé que sur au moins les deux tiers longitudinaux inférieurs restants desdits haubans (107, 108) en moyenne.

4. Vélo selon l'une quelconque des revendications précédentes, dans lequel ledit tube de selle (104) et ledit ressort à lame (111) sont formés de telle sorte que la longueur de ressort efficace dudit ressort à lame (111) est raccourcie quand ledit système de suspension de roue arrière est comprimé, du fait que ledit ressort à lame (111) entre en contact avec ledit tube de selle (104) à un ou plusieurs emplacements désignés.

5. Vélo selon l'une quelconque des revendications précédentes, dans lequel plus de 30 % de la longueur desdites surfaces supérieure et inférieure dudit ressort à lame (111) se trouve à un emplacement donné quelconque à moins de 12° de la parallèle audit tube de selle (104) dudit vélo.

6. Vélo selon l'une quelconque des revendications précédentes, dans lequel lesdites surfaces supérieure et inférieure dudit ressort à lame (111) sont substantiellement parallèles à une surface adjacente dudit tube de selle (104) sur la portion longitudinale dudit ressort à lame (111) qui s'étend depuis la connexion entre ledit ressort à lame (111) et ledit tube de selle (104), au pied dudit ressort à lame (111), jusqu'à une portion située au moins à 30 % vers le haut sur la longueur dudit ressort à lame (111), dans ladite portion longitudinale substantiellement parallèle dudit ressort à lame (111), la distance substantiellement perpendiculaire entre ledit ressort à lame (111) et ledit tube de selle (104) étant comprise entre 1 mm et 40 mm, par exemple entre 5 mm et 20 mm.

7. Vélo selon l'une quelconque des revendications précédentes, dans lequel un ou plusieurs desdits un ou plusieurs inserts de réglage de rigidité (901, 1001, 1201, 2001) peuvent coulisser vers le haut et vers le bas le long et entre ledit ressort à lame (111) et ledit tube de selle (104), lesdits un ou plusieurs inserts de réglage de rigidité coulissants (901, 1001, 1201, 2001) étant guidés pour empêcher tout mouvement latéral.

8. Vélo selon la revendication 7, dans lequel un ou plusieurs desdits un ou plusieurs inserts de réglage de rigidité coulissants (901, 1001, 1201, 2001) présentent une texture de préhension mécanique (A) qui interagit avec une texture de préhension mécanique (B) opposée correspondante sur ledit ressort à lame (111) et/ou sur ledit tube de selle (104), lesdits un ou plusieurs inserts de réglage de rigidité coulissants (901, 1001, 1201, 2001) de préhension mécanique comprenant en outre un moyen pour presser l'une sur l'autre lesdites textures de préhension mécanique opposées (A et B).

9. Vélo selon la revendication 7 ou 8, comprenant un actionneur linéaire pour faire coulisser un ou plusieurs desdits un ou plusieurs inserts de réglage de rigidité coulissants (901, 1001, 1201, 2001) vers le haut et vers le bas.

10. Vélo selon la revendication 9, dans lequel ledit actionneur linéaire est agencé dans une rainure qui monte et descend sur la surface postérieure dudit tube de selle, et lesdits un ou plusieurs desdits un ou plusieurs inserts de réglage de rigidité coulissants (901, 1001, 1201, 2001) comportent une extrusion formée pour interagir latéralement avec la surface de ladite rainure.

11. Vélo selon l'une quelconque des revendications précédentes, dans lequel un ou plusieurs desdits un ou plusieurs inserts de réglage de rigidité (901, 1001, 1201, 2001) sont formés de telle sorte que l'épaisseur desdits un ou plusieurs desdits un ou plusieurs inserts de réglage de rigidité (901, 1001, 1201, 2001) à l'extrémité qui est plus proche du pied dudit ressort à lame (111) est telle que, quand le cycliste est à l'arrêt en position de conduite sur ledit vélo, elle s'insère entièrement entre ledit ressort à lame (111) et ledit tube de selle (104), tandis que son épaisseur à l'extrémité la plus éloignée du pied dudit ressort à lame (111) est telle qu'il manque jusqu'à 5 mm pour s'insérer entièrement entre ledit ressort à lame (111) et le tube de selle (104).

12. Vélo selon l'une quelconque des revendications précédentes, dans lequel lesdits un ou plusieurs inserts de réglage de rigidité coulissants (901, 1001, 1201, 2001) mesurent entre 5 mm et 40 mm de long dans la direction haut/bas.

13. Vélo selon l'une quelconque des revendications précédentes, dans lequel lesdits un ou plusieurs inserts de réglage de rigidité (901, 1001, 1201, 2001) présentent des largeurs qui s'étendent au moins essentiellement entre les bords gauche et droit dudit ressort à lame (111).
